# EUROPÄISCHE PATENTSCHRIFT

(11) **EP 2 542 368 B1**
(45) Veröffentlichungstag und Bekanntmachung des Hinweises auf die Patenterteilung: **08.04.2015**
(21) Anmeldenummer: 11703713.5
(22) Anmeldetag: 18.02.2011
(51) Int. Cl.: B23B 31/107

(54) **VORRICHTUNG ZUR VERBINDUNG ZWEIER BAUTEILE**
DEVICE FOR CONNECTING TWO COMPONENTS
DISPOSITIF POUR L'ASSEMBLAGE DE DEUX COMPOSANTS

(30) Priorität: 26.08.2010 DE 102010039793; 02.03.2010 DE 102010002491
(43) Veröffentlichungstag der Anmeldung: 09.01.2013
(73) Patentinhaber: Komet Group GmbH, 74354 Besigheim (DE)
(72) Erfinder: SPORS, Benno, 71672 Marbach (DE); STOLZ, Gerhard, 74379 Ingersheim (DE); BIERL, Wolfgang, 74363 Güglingen (DE); DUBS, Waldemar, 70806 Kornwestheim/Pattonville (DE)
(74) Vertreter: Wolf, Eckhard
(86) Internationale Anmeldenummer: PCT/EP2011/052411
(87) Internationale Veröffentlichungsnummer: WO 2011/107354

(56) Entgegenhaltungen:
- EP-A1- 0 155 539
- EP-A1- 0 295 315
- EP-A1- 0 633 039
- WO-A1-02/051572
- DE-A1- 3 908 500
- DE-A1- 10 004 895
- DE-C1- 3 632 045
- DE-U1-202008 007 199
- GB-A- 2 094 191
- US-A1- 2006 042 707
- US-A1- 2009 256 318

## Beschreibung

Die Erfindung betrifft eine Vorrichtung zur Verbindung zweier Bauteile, insbesondere zweier Werkzeugteile, mit einem am ersten Bauteil angeordneten zylindrischen Passzapfen und mit einer den Passzapfen an dessen Wurzel umgebenden, radial überstehenden Ringfläche, mit einer im zweiten Bauteil angeordneten zylindrischen Passbohrung zur Aufnahme des Passzapfens und mit einer die Passbohrung an deren Rand umgebenden Ringfläche, mit einem mit einer zylindrischen Führungsfläche in einer Querbohrung des Passzapfens verschiebbar geführten, an seinen stirnseitigen Enden je einen zur Führungsfläche konzentrischen Innen- oder Außenkonus aufweisenden Klemmbolzen, dessen Länge kleiner als der Durchmesser des Passzapfens im Bereich der Querbohrung ist, und mit zwei in im Bereich der Passbohrung einander diametral gegenüberliegende, vorzugsweise mit einem Innengewinde versehene Radialbohrungen eingesetzten, einen nach dem inneren der Passbohrung weisenden, zum Innen- bzw. Außenkonus des Klemmbolzens komplementären Außen- oder Innenkonus aufweisenden, beim Spannvorgang mittels einander zugeordneter kegelstumpfförmiger Kontaktpartien keilartig mit dem Klemmbolzen verspannbaren Halteorganen, wobei die zueinander komplementären Innen- und Außenkonen paarweise einen beim Spannvorgang den Einzug des Passzapfens in die Passbohrung und ein gegenseitiges Anpressen der Ringflächen bewirkenden Achsversatz aufweisen.

Eine derartige Vorrichtung ist aus der EP-0 295 315 A1 bekannt. Bei einer bekannten Vorrichtung dieser Art (EP-0 547 049 B1) ist das eine Ende des Klemmbolzens als Innenkonus und das andere als Außenkonus ausgebildet. Das eine Halteorgan ist als im zweiten Bauteil fixierte Anschlagschraube ausgebildet, die einen mit dem Außenkonus des Klemmbolzens zusammenwirkenden Innenkonus aufweist, während das andere Halteorgan als Bewegungsschraube ausgebildet ist, die einen in den Innenkonus des Klemmbolzens eingreifenden Außenkonus aufweist. Die Bewegungsschraube und die Anschlagschraube weisen ebenso wie der Klemmbolzen an ihrem Innen- und Außenkonus den gleichen Konuswinkel von ca. 90° auf. Kommt es beim Eindrehen der Bewegungsschraube zur Anlage, treten die dadurch eingeleiteten Kräfte zunächst auf der Seite der Bewegungsschraube auf. Der Klemmbolzen wird dabei zuerst bewegungsschraubenseitig gegen den dem Passzapfenende zugewandten Querbohrungsgrund so angedrückt, dass der Passzapfen in die Passbohrung eingezogen wird. Unmittelbar danach erfolgt dies auch beim Auflaufen des Klemmbolzens-Außenkonus auf den Innenkonus der gegenüberliegenden Anschlagschraube. Sobald eine gewisse Spannwirkung eingetreten ist, erfolgt die Umsetzung der Radialkräfte in eine die Ringflächen des ersten und zweiten Bauteils gegeneinander pressende Axialkomponente. Ein Teil des über die Bewegungsschraube eingebrachten Drehmoments wird allerdings dazu verwendet, um die Reibung des Klemmbolzens in der Querbohrung zu überwinden. Dies bedeutet, dass die Ringflächen auf der Seite der Bewegungsschraube mit einer größeren Axialkraft gegeneinander gepresst werden als auf der Seite der Anschlagschraube.

Um diesen Nachteil der bekannten Vorrichtung dahingehend zu verbessern, dass das beim Spannvorgang erzeugte Drehmoment innerhalb der Verbindungsvorrichtung besser und über den Umfang gesehen gleichförmiger in die Planflächenverspannung umgesetzt wird, wurde bereits vorgeschlagen (EP-1 343 602 B1), dass die zueinander komplementären Innen- und Außenkonen auf der Seite der Anschlagschraube einen kleineren Konuswinkel aufweisen als auf der Seite der Bewegungsschraube. So betragen die Konuswinkel auf der Seite der Anschlagschraube vorzugsweise zwischen 40° und 80°, während sie auf der Seite der Bewegungsschraube zwischen 70° und 120° betragen. Beim Spannvorgang wirken die ineinandergreifenden Innen- und Außenkonen als eine Art Keilgetriebe, über die die Radialbewegung der Bewegungsschraube und des Klemmbolzens teilweise in die axiale Planflächenverspannung umgesetzt wird. Aufgrund der dort vorgeschlagenen unterschiedlichen Konuswinkel auf der Seite der Bewegungsschraube und der Anschlagschraube ergeben sich prozentual unterschiedliche axiale Kraftkomponenten. Mit dem kleineren Konuswinkel auf der Seite der Anschlagschraube erhält man eine vergrößerte Axialkomponente und damit eine Kompensation der Reibverluste des Klemmbolzens innerhalb der Querbohrung.

Die Umsetzung dieses Prinzips wird vor allem dadurch erschwert, dass zwischen dem in der Praxis weit verbreiteten Kupplungssystem, mit auf der Seite der Bewegungsschraube und der Seite der Anschlagschraube gleichen Konuswinkeln von ca. 90° und dem technisch verbesserten Kupplungssystem mit unterschiedlichen Konuswinkeln keine den Bauteilaustausch ermöglichende Auf- und Abwärtskompatibilität besteht.

Der Erfindung liegt die Aufgabe zugrunde diesen Nachteil zu vermeiden.

Zur Lösung dieser Aufgabe werden die in den Patentansprüchen 1 und 6 angegebenen Merkmalskombinationen vorgeschlagen. Vorteilhafte Ausgestaltungen und Weiterbildungen der Erfindung ergeben sich aus den abhängigen Ansprüchen.

Die Erfindung geht vor allem von der Erkenntnis aus, dass die einander zugewandten komplementären Außen- und Innenkonen im Anlagebereich nicht über ihre gesamte axiale Länge gegeneinander gepresst werden, sondern nur über einen Teil der Konusfläche. Daraus resultiert der Grundgedanke der Erfindung, dass der Innenkonus und/oder der Außenkonus des Klemmbolzens und/oder mindestens eines der Halteorgane in axialer Richtung unterteilt wird in zwei koaxial in axialem Abstand voneinander angeordnete, im Wesentlichen kegelstumpfförmige Kontaktpartien, die beim Spannvorgang entweder einzeln oder gemeinsam wirksam sind.

Erfindungsgemäß ergeben sich dabei verschiedene Kombinationsmöglichkeiten, die zur Kompatibilität der genannten Kupplungssysteme mit gleichen oder unterschiedlichen bewegungsschraubenseitigen und anschlagschraubenseitigen Konuswinkeln führen:

Eine erste Erfindungsvariante sieht vor, dass der Innenkonus und/oder der Außenkonus des Klemmbolzens zwei koaxial in axialem Abstand voneinander angeordnete, im Wesentlichen kegelstumpfförmige Kontaktpartien aufweisen, die beim Spannvorgang entweder einzeln oder gemeinsam wirksam sind.

Mit dieser Maßnahme lässt sich eine Kompatibilität mit einer ersten Gruppe von Halteorganen herstellen, deren Außenkonus oder Innenkonus zwei in axialem Abstand voneinander angeordnete, im Wesentlichen kegelstumpfförmige Kontaktpartien mit unterschiedlichen Konuswinkeln aufweist, von denen nur eine mit einer der Kontaktpartien des benachbarten Innenkonus oder Außenkonus des Klemmbolzens komplementär ist.

Weiter ist eine Kompatibilität mit einer zweiten Gruppe von Halteorganen möglich, deren Außenkonus oder Innenkonus nur eine kegelstumpfförmige Kontaktpartie aufweist, die mit einer der Kontaktpartien des benachbarten Innenkonus oder Außenkonus des Klemmbolzens komplementär ist.

Eine zweite Erfindungsvariante sieht vor, dass der Außenkonus oder der Innenkonus zumindest eines der Halteorgane zwei koaxial in axialem Abstand voneinander angeordnete, im Wesentlichen kegelstumpfförmige Kontaktpartien aufweisen, die beim Spannvorgang entweder einzeln oder gemeinsam wirksam sind.

Mit einer solchen Anordnung ist die Kompatibilität zu einer ersten Gruppe von Klemmbolzen gewährleistet, deren Innenkonus und/oder Außenkonus zwei koaxial in axialem Abstand voneinander angeordnete, im Wesentlichen kegelstumpfförmige Kontaktpartien mit unterschiedlichen Konuswinkeln aufweist, von denen jeweils nur eine mit einer der Kontaktpartien der benachbarten Außenkonus oder Innenkonus eines der Halteorgane komplementär ist. Andererseits besteht Kompatibilität mit einer zweiten Gruppe von Klemmbolzen, deren Innenkonus und/oder Außenkonus nur eine im Wesentlichen kegelstumpfförmige Kontaktpartie aufweist, die mit einer der Kontaktpartien des benachbarten Außenkonus oder Innenkonus eines der Halteorgane komplementär ist.

Bei allen Ausführungsvarianten der vorgenannten Art, bei denen es auf die Kompatibilität ankommt, weisen die in axialem Abstand voneinander angeordneten Kontaktpartien des Klemmbolzens und der Halteorgane einen zur jeweils freien Stirnseite hin größer werdenden Konuswinkel auf. Grundsätzlich ist es jedoch auch möglich, die in axialem Abstand voneinander angeordneten Kontaktpartien der Außen- und Innenkonen gemeinsam und paarweise miteinander zu verspannen. In diesem Fall geht es nicht um die Kompatibilität zwischen den verschiedenen Spannsystemen, sondern um die Herstellung einer zuverlässigen Klemmverbindung mit zwei in axialem Abstand voneinander angeordneten Kontaktbereichen.

Eine weitere bevorzugte Ausgestaltung der Erfindung sieht vor, dass die Kontaktpartien des Klemmbolzens und/oder der Halteorgane eine in axialer Richtung vorzugsweise schwach gewölbte Mantelfläche aufweisen. Die Mantelfläche der Kontaktpartien weist vorzugsweise einen Krümmungsradius von 4 mm bis 50.000 mm auf. Im Kompatibilitätsfall sind die Kontaktpartien der miteinander paarweise in Berührung kommenden Kontaktflächen in axialer Richtung konvex gekrümmt. In Spezialfällen ist jedoch auch eine Paarung von konvexen und konkaven Kontaktpartien denkbar.

Eine weitere bevorzugte Ausgestaltung der Erfindung sieht vor, dass die Kontaktpartien des Klemmbolzens und der Halteorgane an ihren umlaufenden Rändern durch jeweils eine im Wesentlichen kegelstumpfförmige Randpartie begrenzt sind. Die Randpartien können dabei eine in axialer Richtung ballige oder hohlkehlenartig gekrümmte Mantelfläche aufweisen. Eine weitere bevorzugte Ausgestaltung der Erfindung sieht vor, dass eines der Halteorgane als am zweiten Bauteil angelegte Anschlagschraube und das andere Halteteil als beim Spannvorgang betätigbare Bewegungsschraube ausgebildet ist, und dass die zueinander komplementären kegelstumpfförmigen Kontaktpartien auf der Seite der Anschlagschraube einen kleineren Konuswinkel aufweisen als auf der Seite der Bewegungsschraube.

Versuche haben gezeigt, dass die Außen- und Innenkonen im Bereich der Bewegungsschraube einem stärkeren Verschleiß unterliegen als auf der Seite der Anschlagschraube. Deshalb hat es sich als besonders zweckmäßig erwiesen, wenn das als Bewegungsschraube ausgebildete Halteorgan einen Außenkonus und der Klemmbolzen auf der Seite der Bewegungsschraube einen hierzu komplementären Innenkonus mit jeweils nur einer kegelstumpfförmigen Kontaktpartie aufweist. Der Konuswinkel beträgt an dieser Stelle zweckmäßig 90°, so dass auf der Seite der Bewegungsschraube eine Übereinstimmung mit dem herkömmlichen ABS-System besteht. Um die Erfindungseigenschaften auch in diesem Falle nutzen zu können, ist es von besonderem Vorteil, wenn das als Anschlagschraube ausgebildete Halteorgan einen Innenkonus und der Klemmbolzen auf der Seite der Anschlagschraube einen Außenkonus mit jeweils zwei in axialem Abstand voneinander angeordneten kegelstumpfförmigen Kontaktpartien mit unterschiedlichen Kegelwinkeln aufweisen. Dabei ist nur eine der Kontaktpartien des Innenkonus der Anschlagschraube mit einer der Kontaktpartien des benachbarten Außenkonus des Klemmbolzens komplementär. Im Falle einer jeweils anderen Kontaktpartie besteht Übereinstimmung mit dem herkömmlichen ABS-Kupplungssystem.

Gemäß einer vorteilhaften Ausgestaltung der Erfindung weist die Bewegungsschraube ein Sägengewinde mit zylindrischen Führungsflächenabschnitten auf. Damit wird eine Verbesserung der Führungseigenschaften sowohl der Bewegungsschraube als auch des Klemmbolzens und damit eine verbesserte Wiederholgenauigkeit beim Spannvorgang erzielt.

Im Folgenden wird die Erfindung anhand der in der Zeichnung in schematischer Weise dargestellten Ausführungsbeispiele näher erläutert. Es zeigen
- Fig. 1: einen Längsschnitt durch eine Werkzeugkupplung mit Planflächenverspannung;
- Fig. 2a und b: einen Längsschnitt durch das als Anschlag oder Kegelschraube ausgebildete Halteorgan der Werkzeugkupplung nach Fig. 1 sowie einen vergrößerten Ausschnitt aus dem Bereich des Innenkonus der Fig. 2a;
- Fig. 3a und b: eine Seitenansicht eines als Bewegungs- oder Spannschraube ausgebildeten Halteorgans der Werkzeugkupplung nach Fig. 1 mit Sägengewinde sowie einen Ausschnitt aus dem Bereich des Außenkonus der Fig. 3a;
- Fig. 3c und d: eine Seitenansicht eines als Bewegungs- oder Spannschraube ausgebildeten Halteorgans mit Trapezgewinde sowie eine Detailansicht des Gewindeteils der Fig. 3c;

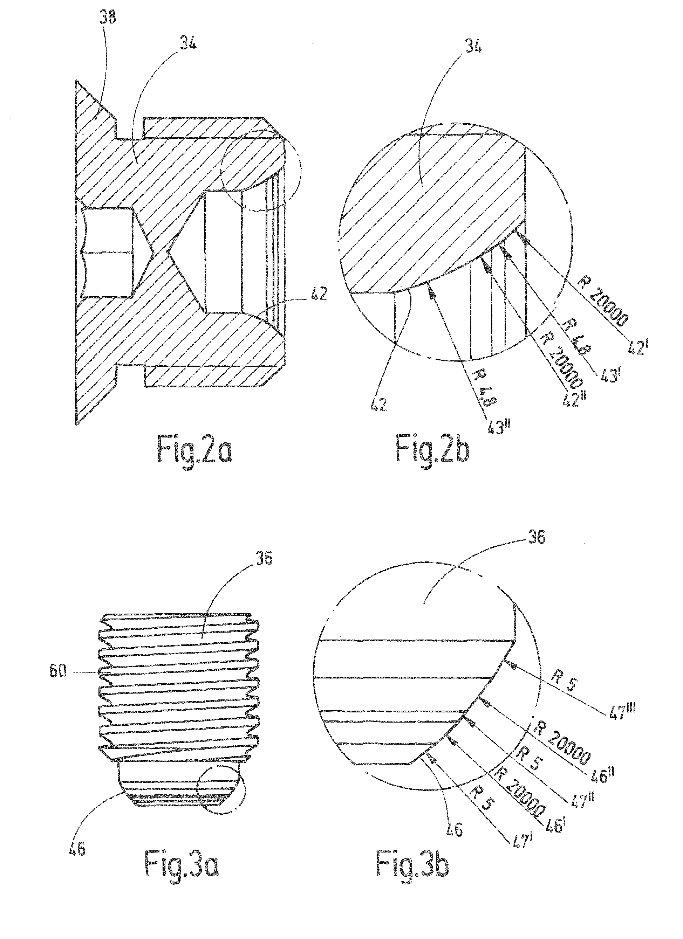

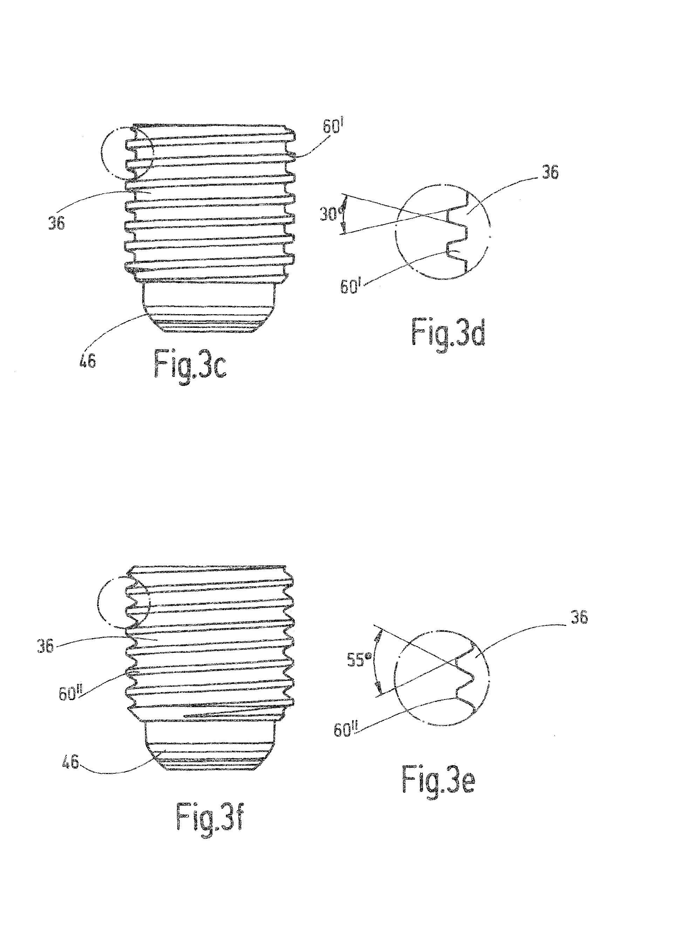

- Fig. 3 f und e: eine Seitenansicht eines als Bewegungs- oder Spannschraube ausgebildeten Halteorgans mit Rohrgewinde sowie eine Detailansicht des Gewindeteils der Fig. 3f;

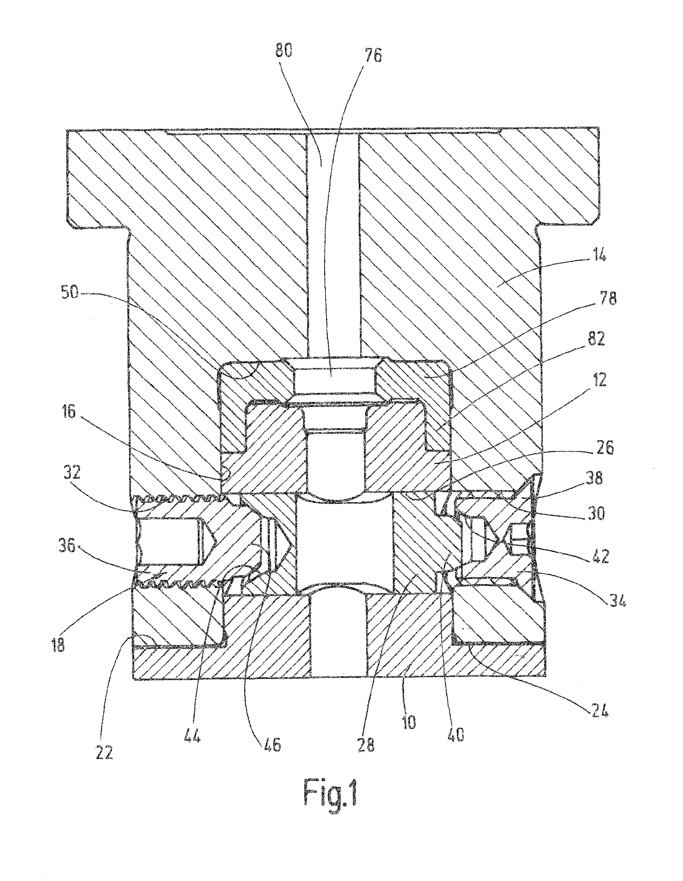

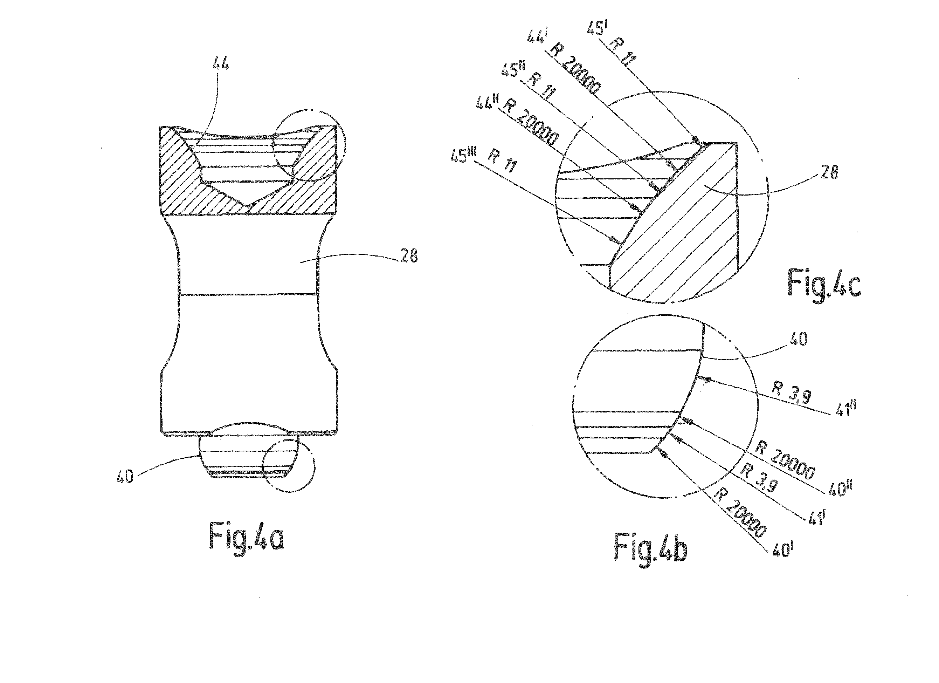

- Fig. 4a bis c: eine Seitenansicht des Klemm- oder Pendelbolzens der Kupplungsvorrichtung nach Fig. 1 in teilweise geschnittener Darstellung sowie zwei Detailansichten des Außenkonus und des Innenkonus der Fig. 4a;

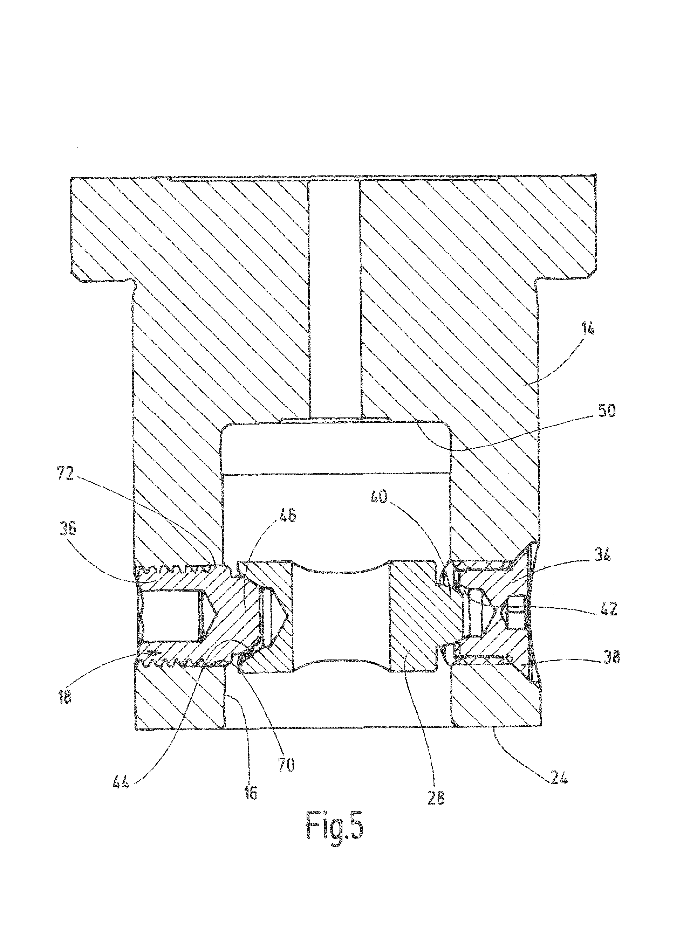

- Fig. 5: einen Längsschnitt durch ein gegenüber Fig. 1 abgewandeltes Ausführungsbeispiel des die Aufnahme aufweisenden Bauteils einer Werkzeugkupplung;

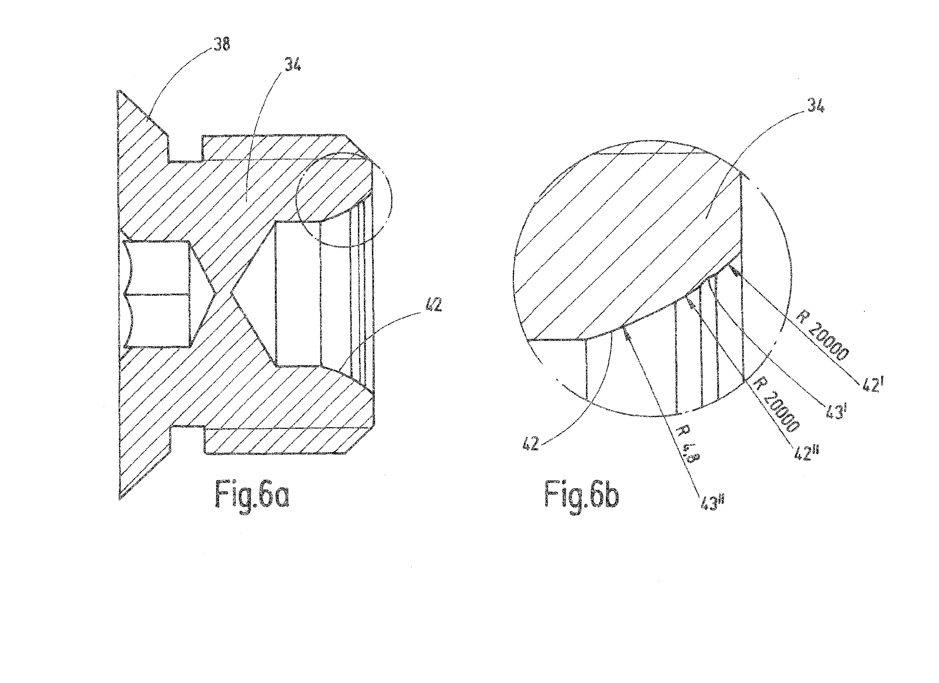

- Fig. 6a und b: einen Längsschnitt durch das als Anschlag- oder Kegelschraube ausgebildete Halteorgan der Werkzeugkupplung nach Fig. 5 sowie einen vergrößerten Ausschnitt aus dem Bereich des Innenkonus der Fig. 6a;

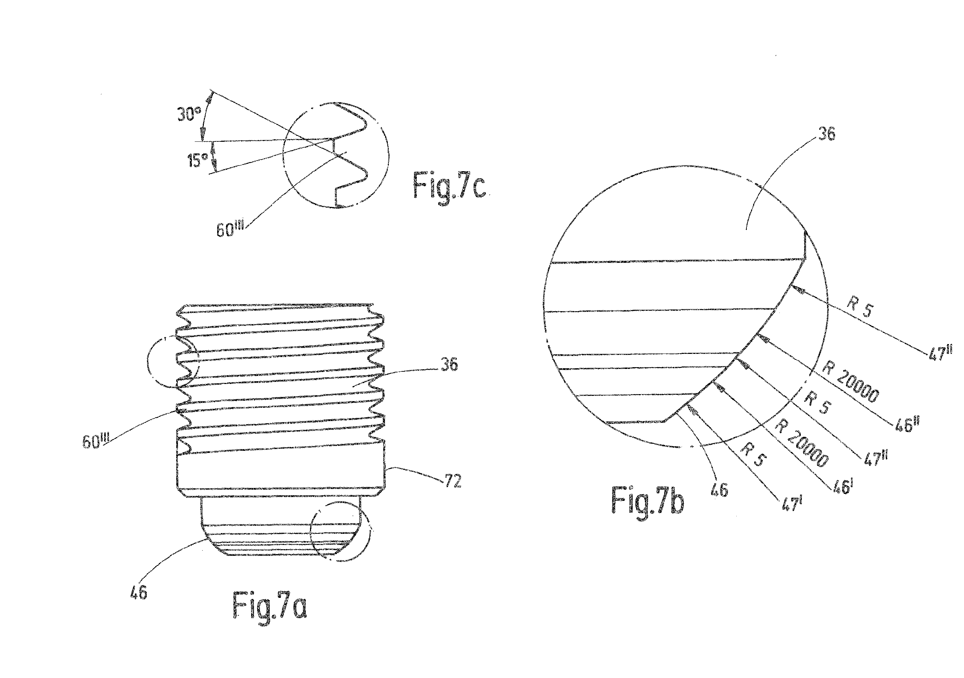

- Fig. 7a bis c: eine Seitenansicht des als Bewegungs- oder Spannschraube ausgebildeten Halteorgans der Werkzeugkupplung nach Fig. 5 mit zwei Detailansichten aus dem Bereich des Außenkonus und des Gewindes der Fig. 7a;

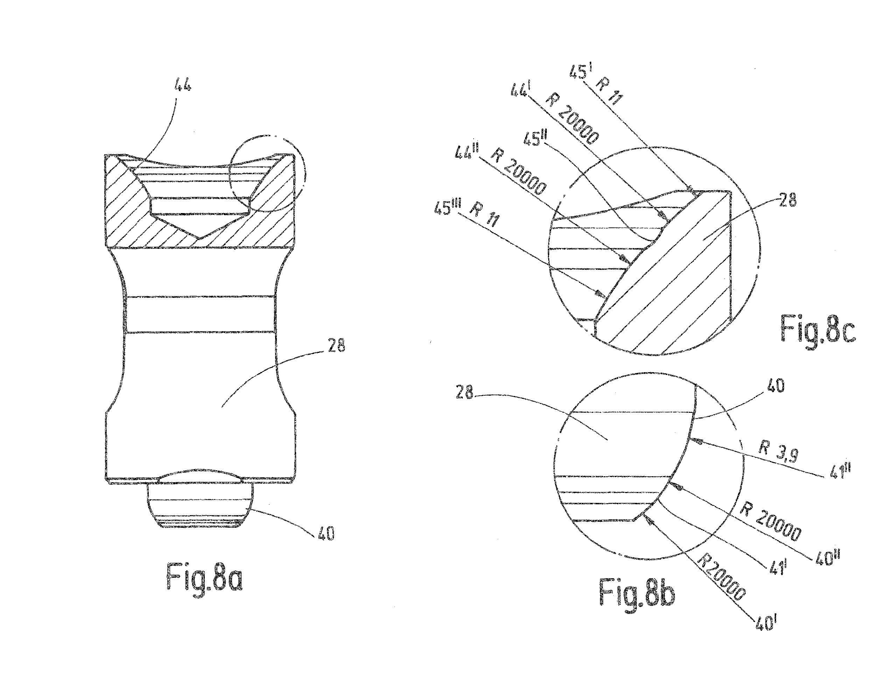

- Fig. 8a bis c: eine Seitenansicht eines Klemm- oder Kegelbolzens der Werkzeugkupplung nach Fig. 5 in teilweise geschnittener Darstellung mit zwei vergrößerten Ausschnitten aus dem Bereich des Außenkonus und des Innenkonus der Fig. 8a;

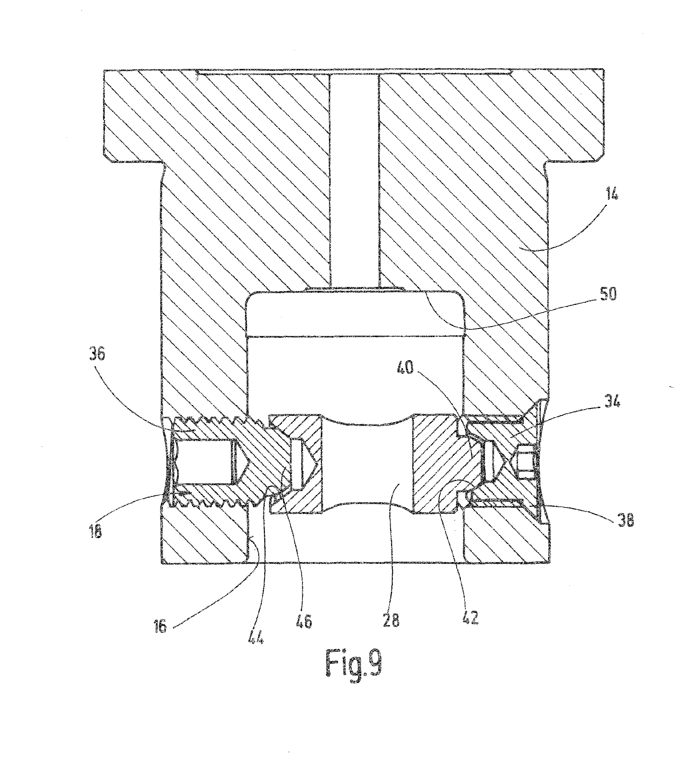

- Fig. 9: ein weiteres gegenüber Fig. 1 abgewandeltes Ausführungsbeispiel des die Aufnahme enthaltenden Bauteils einer Werkzeugkupplung;

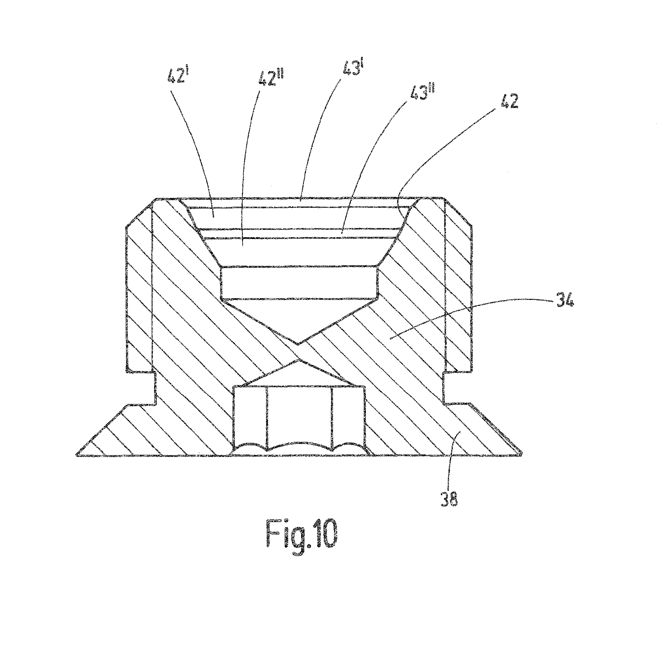

- Fig. 10: einen Längsschnitt durch das als Anschlag- oder Kegelschraube ausgebildete Halteorgan der Werkzeugkupplung nach Fig. 9;

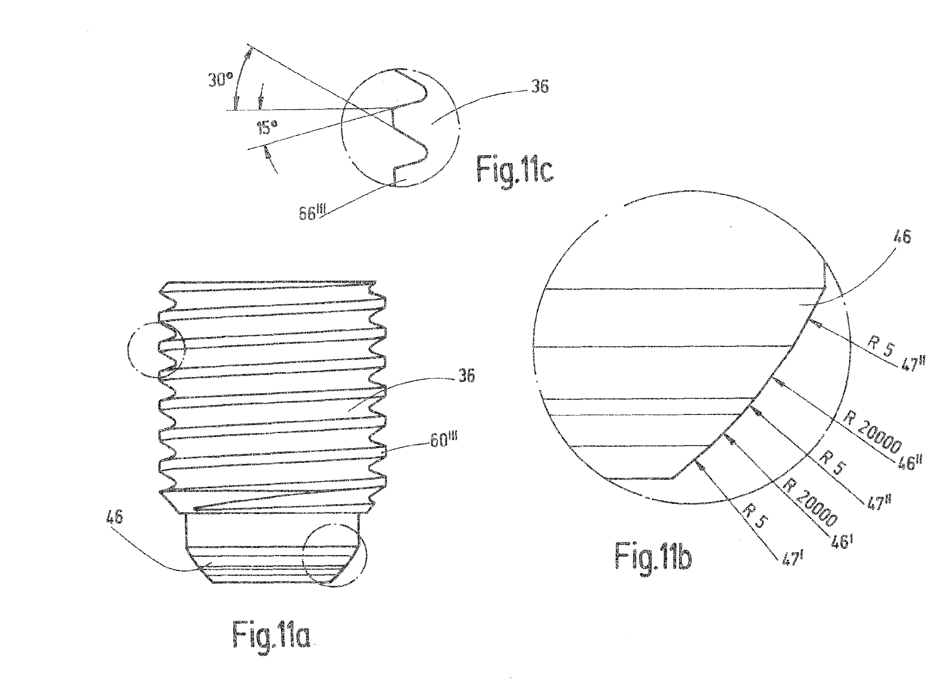

- Fig. 11a bis c: eine Seitenansicht des als Bewegungs- oder Spannschraube ausgebildeten Halteorgans der Werkzeugkupplung nach Fig. 9 mit Sägengewinde sowie vergrößerte Ausschnitte aus dem Bereich des Außenkonus und des Gewindes der Fig. 11a;

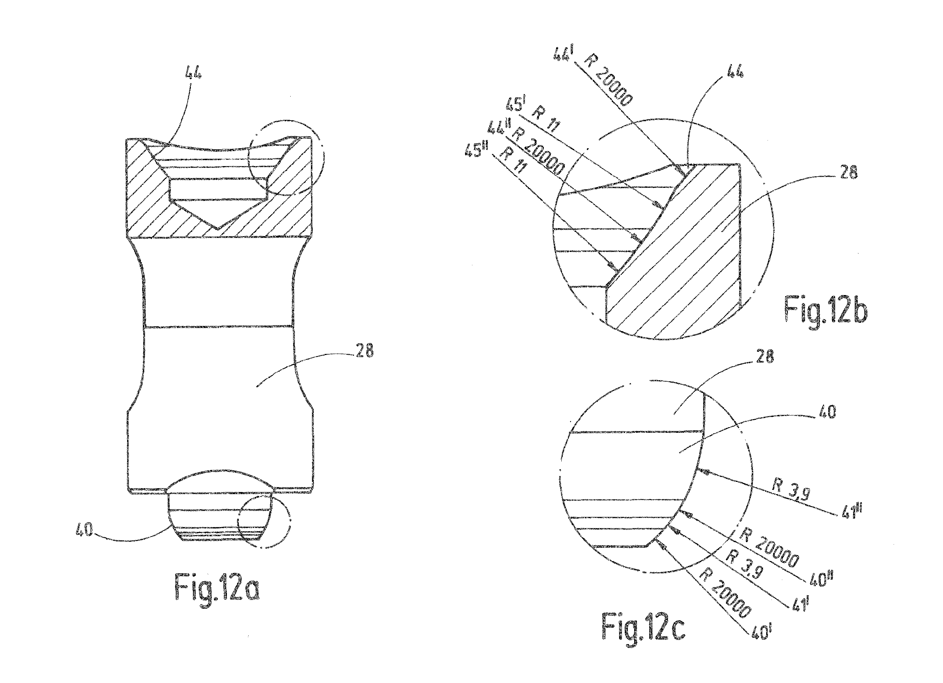

- Fig. 12a bis c: eine Seitenansicht eines Klemm- oder Pendelbolzens der Werkzeugkupplung nach Fig. 9 in teilweise geschnittener Darstellung sowie zwei Detailansichten aus dem Bereich des Innen- oder Außenkonus der Fig. 12a;

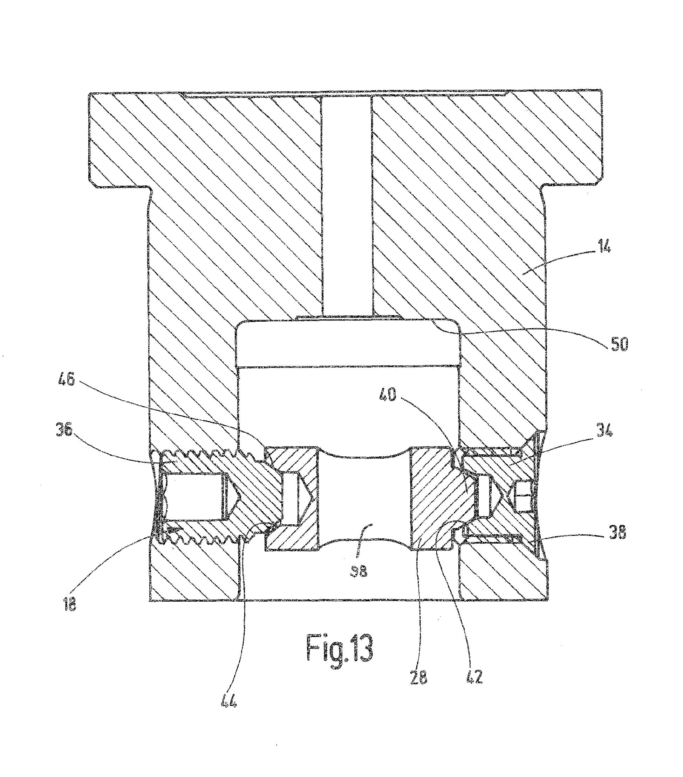

- Fig. 13: einen Längsschnitt durch das die Aufnahme enthaltende Bauteil eines weiteren gegenüber Fig. 1 abgewandelten Ausführungsbeispiels einer Werkzeugkupplung;

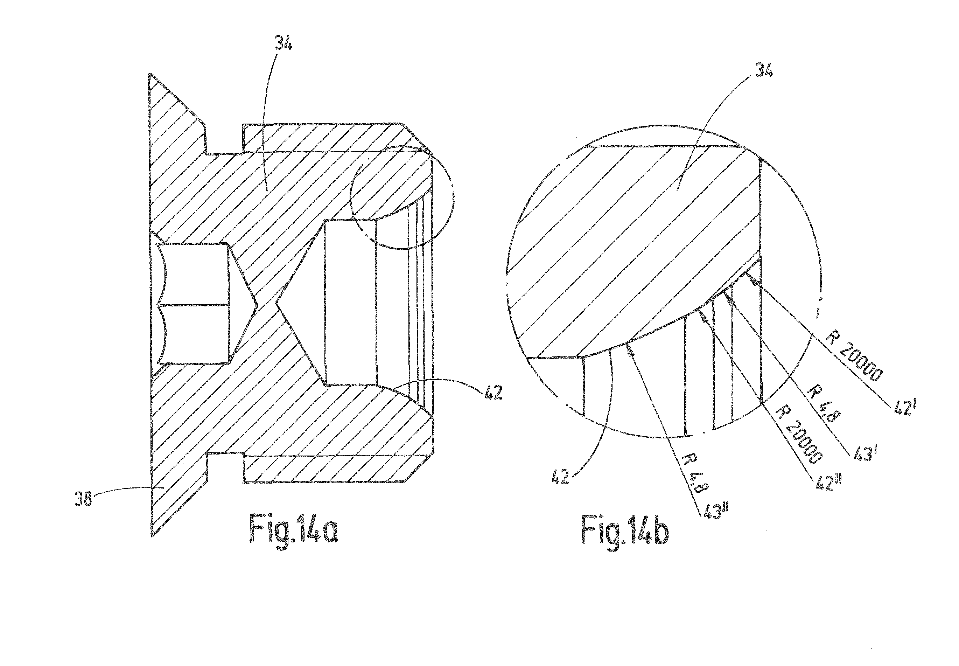

- Fig. 14a und: b einen Längsschnitt des als Anschlag- oder Kegelschraube ausgebildeten Halteorgans der Werkzeugkupplung gemäß Fig. 13 sowie einen vergrößerten Ausschnitt aus Fig. 14a;

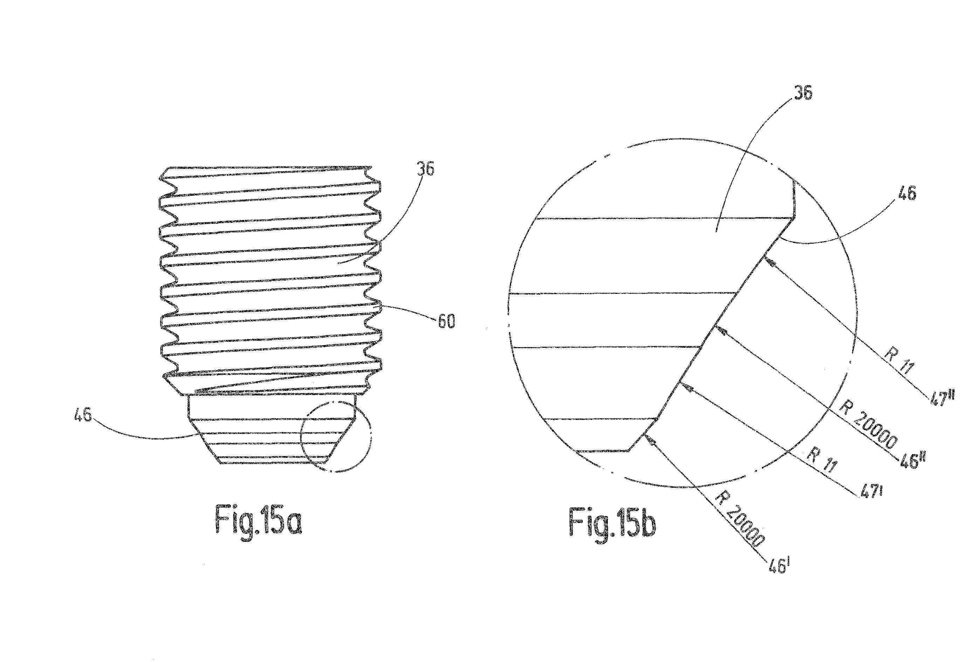

- Fig. 15a und: b eine Seitenansicht des als Bewegungs- oder Spannschraube ausgebildeten Halteorgans der Werkzeugkupplung nach Fig. 13 sowie einen vergrößerten Ausschnitt aus dem Bereich des Außenkonus der Fig. 15a;

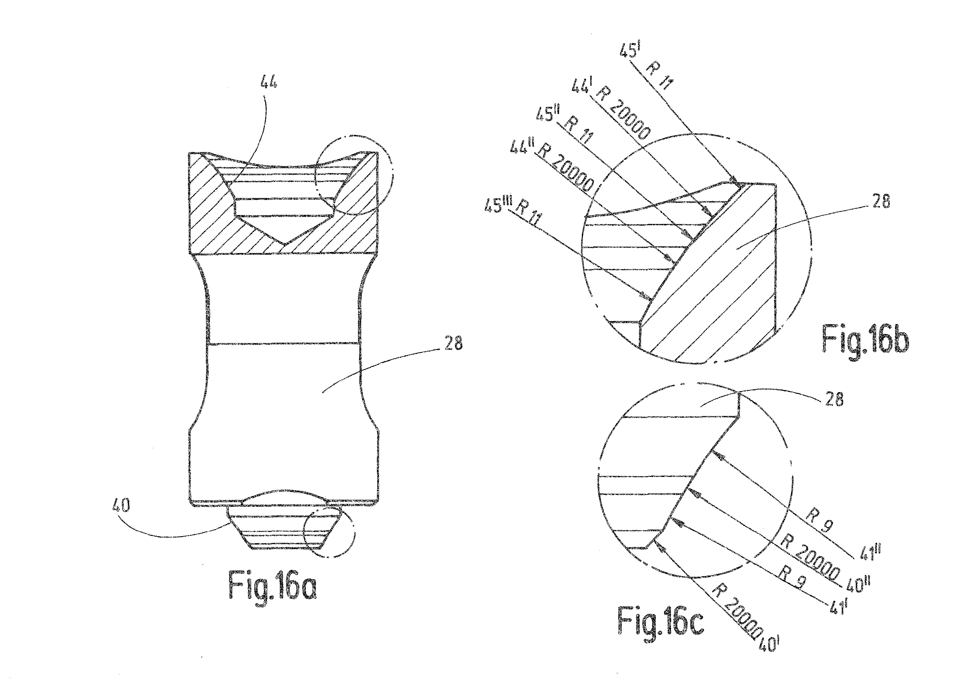

- Fig. 16a bis c: eine Seitenansicht des Klemm- oder Pendelbolzens der Werkzeugkupplung nach Fig. 13 sowie zwei vergrößerte Ausschnitte aus dem Bereich des Innenkonus und des Außenkonus der Fig. 16a;

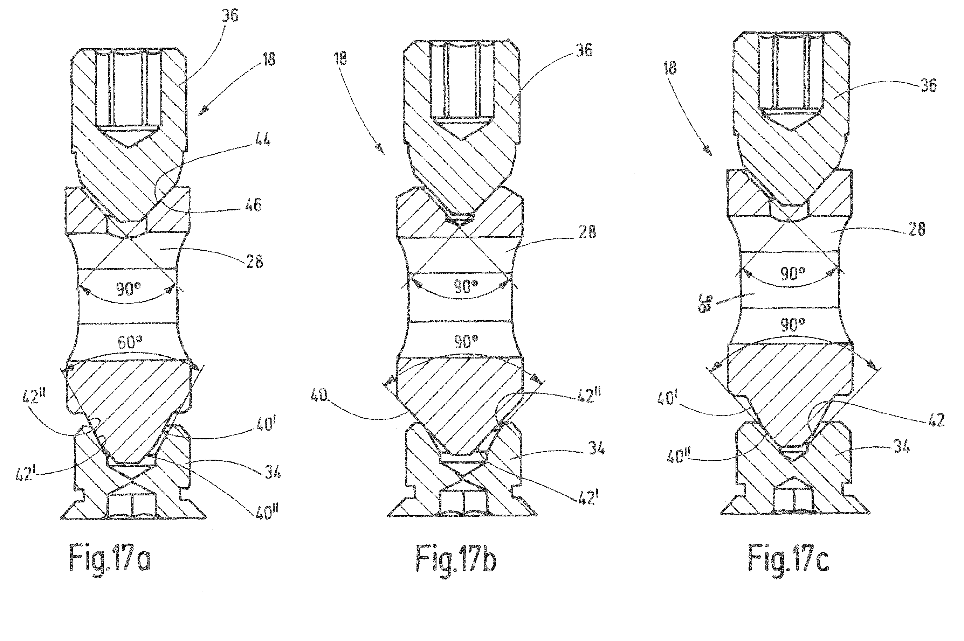

- Fig. 17a bis c: ein abgewandeltes Ausführungsbeispiel eines Spannmechanismus für eine Werkzeugkupplung entsprechend Fig. 1 in geschnittener Darstellung in drei kompatiblen Bauformen;

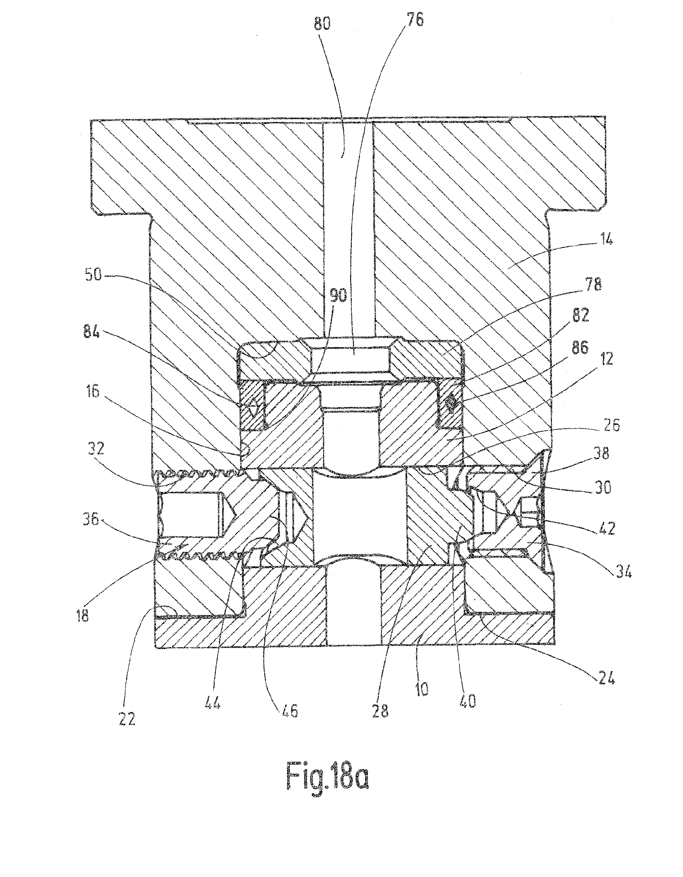

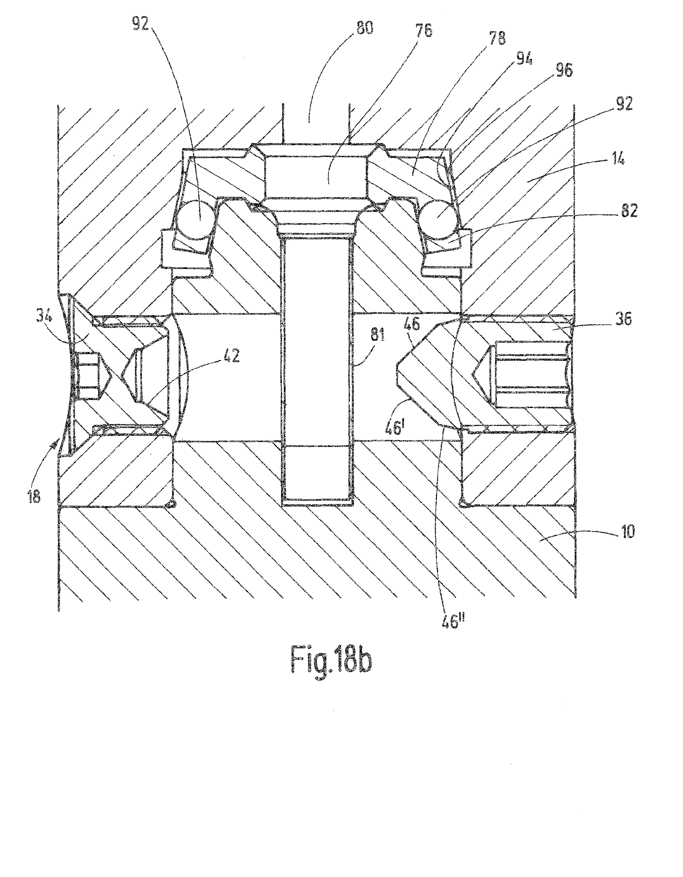

- Fig. 18a und b: je einen Längsschnitt durch zwei weitere Ausführungsformen einer Werkzeugkupplung mit gegenüber Fig. 1 modifizierten Dicht- und Zentrierringen;

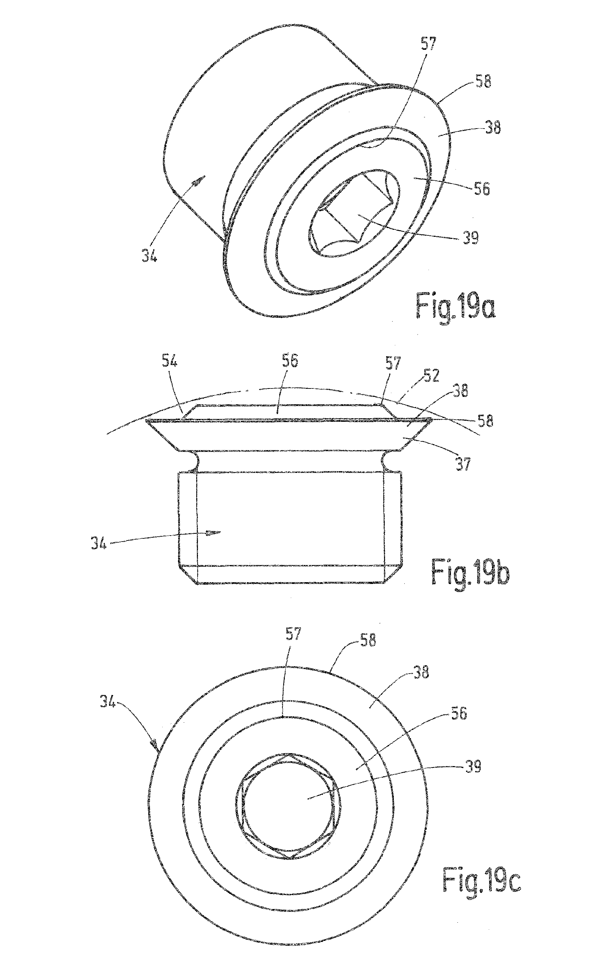

- Fig. 19a bis c: eine schaubildliche Ansicht, eine Seitenansicht und eine Draufsicht einer weiteren Ausführungsform des als Anschlagschraube ausgebildeten Halteorgans;

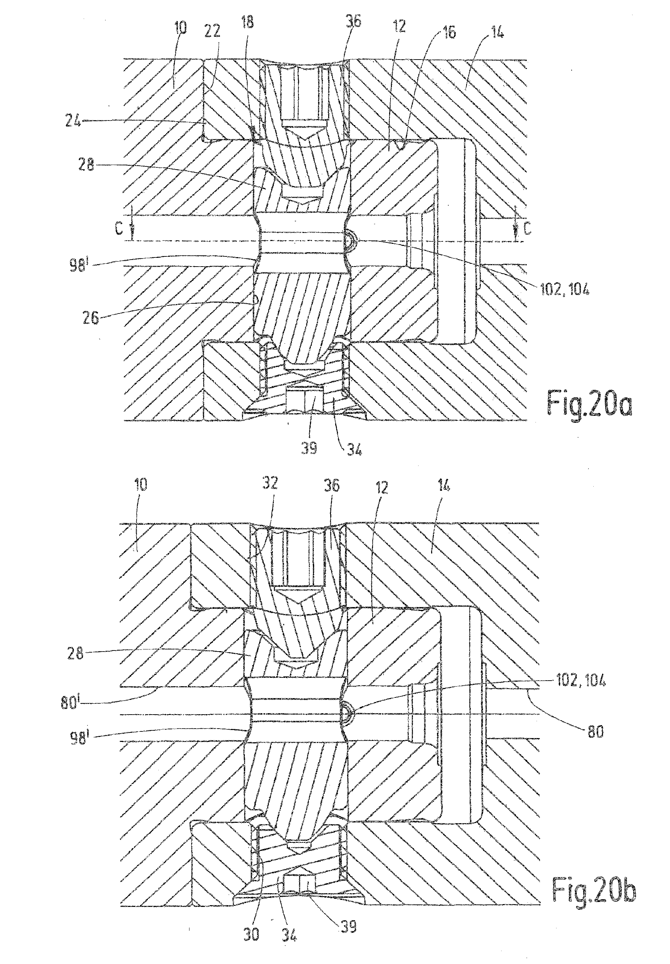

- Fig. 20a und b: einen Längsschnitt durch ein gegenüber Fig. 1 abgewandeltes Ausführungsbeispiel einer Werkzeugkupplung in Planflächenverspannung mit 90°- und mit 60°-Innenkonus auf der Anschlagschraubenseite und mit unmittelbarer Kühlmitteldurchführung durch den Spannmechanismus;

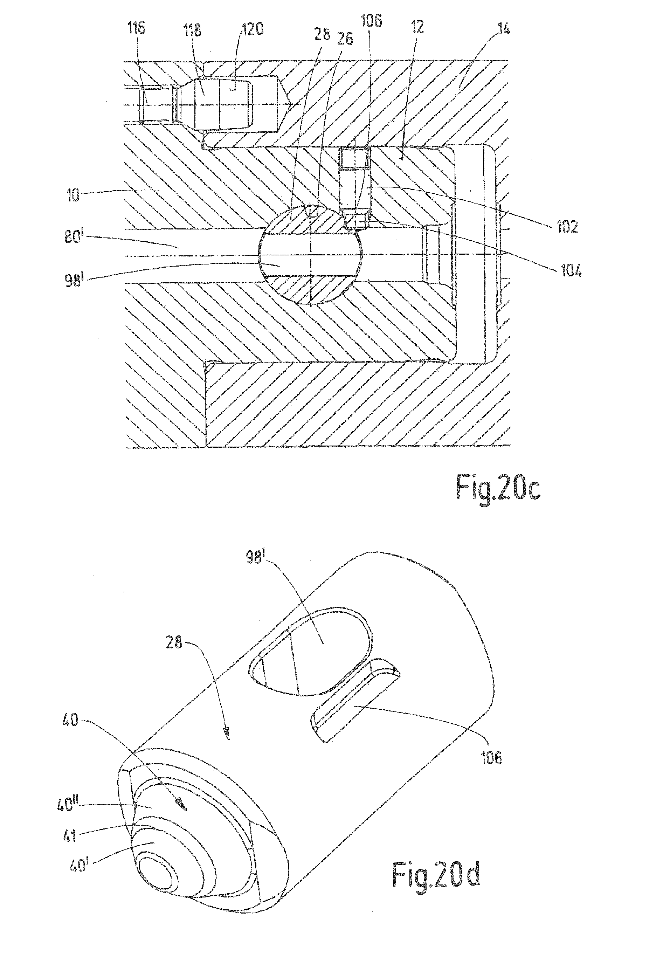

- Fig. 20c: einen Schnitt entlang der Schnittlinie C-C der Fig. 20a;
- Fig. 20d: eine schaubildliche Darstellung des Klemmbolzens für das Ausführungsbeispiel nach Fig. 20a bis c;

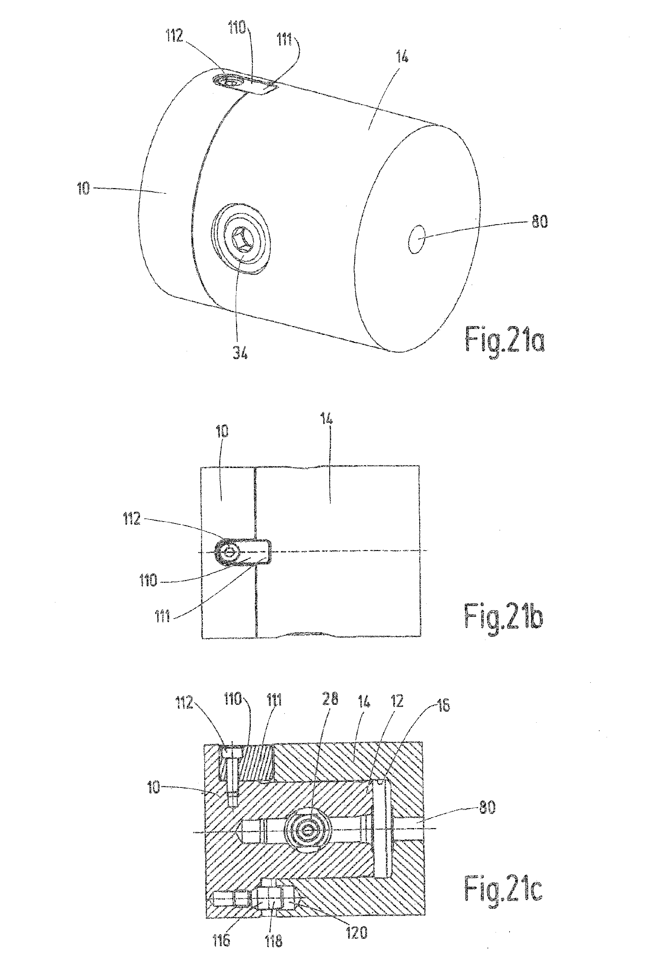

- Fig. 21a bis c: eine schaubildliche Darstellung, eine Seitenansicht und einen Längsschnitt einer gegenüber Fig. 1 abgewandelten Ausführungsform einer Werkzeugkupplung mit Nutenstein für die Drehmomentübertragung;

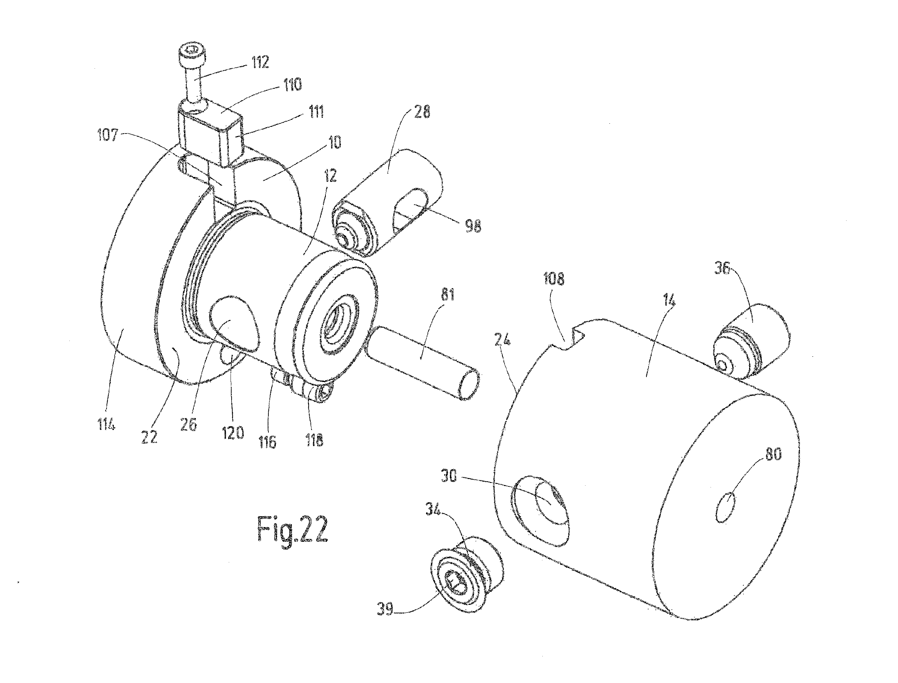

- Fig. 22: eine schaubildliche Explosionsdarstellung der Werkzeugkupplung nach Fig. 21a bis c.

Die in der Zeichnung dargestellten Verbindungsvorrichtungen dienen zur lösbaren Kupplung von Bauteilen. Unter "Bauteilen" sollen vorstehend und nachstehend vor allem Werkzeugteile verstanden werden, die entweder einen Passzapfen oder eine Passbohrung enthalten, also insbesondere Werkzeugköpfe, Werkzeugschäfte, Adapterteile oder Zwischenelemente, sowie Verlängerungs- und Reduzierungsteile, Verstellköpfe, Spindelvorsatzflansche und ggf. eine Maschinenspindel.

Die in Fig. 1 gezeigte Verbindungsvorrichtung besteht im Wesentlichen aus einem an einem ersten Bauteil 10 axial überstehenden Passzapfen 12, einer in einem zweiten Bauteil 14 angeordneten Passbohrung 16 und einem Spannmechanismus 18 zum Einziehen des Passzapfens 12 in die Passbohrung 16 sowie zur Erzeugung einer Planflächenverspannung zwischen der den Passzapfen 12 umgebenden Ringfläche 22 des ersten Bauteils 10 und der die Passbohrung 16 begrenzenden Ringfläche 24 des zweiten Bauteils 14.

Der Spannmechanismus 18 enthält einen in einer Querbohrung 26 des Passzapfens 12 verschiebbar angeordneten Klemmbolzen 28, sowie zwei in Radialbohrungen 30, 32 des zweiten Bauteils 14 eingesetzte, einander diametral gegenüberliegende Halteorgane 34, 36. In der Praxis wird der Klemmbolzen 28 häufig auch als Pendelbolzen bezeichnet. Das Halteorgan 34 nach Fig. 1 und 2 ist als mit ihrem Senkkopf 38 am zweiten Bauteil 14 festgelegte Anschlagschraube ausgebildet, während das Halteorgan 36 eine Bewegungsschraube bildet.

Bei dem in Fig. 1 gezeigten Ausführungsbeispiel schlägt die Anschlagschraube 34 im montierten Zustand mit einem Anschlagkonus 37 ihres Senkkopfs 38 gegen einen entsprechenden Innenkonus des zweiten Bauteils 14 so an, dass außenseitig bis zum zylindrischen Mantelumfang 52 des zweiten Bauteils 14 noch etwas Freiraum 54 verbleibt. Um die Festigkeit der Anschlagschraube 34 zu erhöhen und den Schlüsseleingriff im Innenmehrkant 39 des Senkkopfs 38 zu vergrößern, bietet dieser Freiraum 54 die Möglichkeit, den Senkkopf 38 außenseitig mit einer Erhebung 56 zu versehen, deren höchste Position 57 im montierten Zustand innerhalb des zylindrischen Mantelumfangs 52 des zweiten Bauteils 14 angeordnet ist. Bei dem in Fig. 19a bis c gezeigten Ausführungsbeispiel ist eine solche Erhebung 56 vorgesehen, die konzentrisch zum Außenrand 58 angeordnet ist und die eine kegelstumpfförmige Gestalt aufweist.

Der Klemmbolzen 28 greift mit seinem Außenkonus 40 in einen Innenkonus 42 der benachbarten Anschlagschraube 34 ein und weist an seinem dem Außenkonus 40 gegenüberliegenden Ende einen Innenkonus 44 zur Aufnahme eines an der Bewegungsschraube 36 angeformten Außenkonus 46 auf.

Zur Herstellung einer Verbindung zwischen den beiden Bauteilen 10, 14 wird zunächst der Passzapfen 12 bei ausgedrehter Bewegungsschraube 36 lose in die Passbohrung 16 des zweiten Bauteils 14 bis zum Anschlag der Ringflächen 22, 24 eingeführt. Beim anschließenden Eindrehen der Bewegungsschraube 36 in das Innengewinde 32 kommt es zunächst zum Anschlag zwischen der Bewegungsschraube 36 und dem Klemmbolzen 28 im Bereich der einander zugewandten Innen- und Außenkonen 44, 46. Im weiteren Verlauf des Spannvorgangs wird der Klemmbolzen 28 mit seinem Außenkonus 40 bis zum Anschlag gegen die Anschlagschraube 34 in den Innenkonus 42 eingeschoben. In diesem Zustand setzt der eigentliche Spannvorgang ein, bei welchem die durch die Halteorgane 36, 34 eingeleiteten Spannkräfte über die konischen Anlageflächen aufgrund eines Achsversatzes den Passzapfen 12 in die Passbohrung 16 einziehenden Axialkräfte umgesetzt werden. Die Axialkräfte führen zu einer Planflächenverspannung an den Ringflächen 22, 24 des ersten und zweiten Bauteils 10, 14. Die Axialkräfte werden dabei durch den Klemmbolzen 28 auf der Seite des Bohrungsgrundes 50 über die Querbohrung 26 auf den Passzapfen 12 und damit auf das erste Bauteil 10 übertragen. Andererseits müssen im Bereich der Halteschrauben 34, 36 die Spannkräfte über das jeweilige Innengewinde 30, 32 innerhalb der Wandung des zweiten Bauteils 14 aufgenommen und abgebaut werden.

Bei einem in der Praxis weit verbreiteten, als ABS-System bekannten Kupplungssystem (ABS^{®} ist eine Handelsmarke der Firma KOMET GROUP GmbH) weisen die Halteorgane 34, 36 ebenso wie der Klemmbolzen 28 an ihrem Innen- und Außenkonus den gleichen Konuswinkel von ca. 90 ° auf. Beim Spannvorgang werden die über die Halteorgane an das Spannsystem eingebrachten Radialkräfte in eine die Ringflächen des ersten und zweiten Bauteils gegeneinander pressende Axialkomponente umgesetzt. Es hat sich gezeigt, dass dabei ein Teil des über das als Bewegungsschraube ausgebildete Halteorgan 36 eingebrachten Drehmoments dazu verwendet wird, um die Reibung des Klemmbolzens 28 in der Querbohrung zu überwinden. Dies bedeutet, dass die Ringflächen 22, 24 auf der Seite der Bewegungsschraube mit einer größeren Radialkraft gegeneinander gepresst werden als auf der Seite der Anschlagschraube. Um diesen Nachteil zu vermeiden, wurde bereits vorgeschlagen (EP 1 343 602 B1), dass der Kegelwinkel (Öffnungswinkel) der zueinander komplementären Innen- und Außenkonen auf der Seite der Bewegungsschraube 36 größer ist als auf der Seite der Anschlagschraube 34. Mit dieser Maßnahme werden die beim Spannvorgang im Bereich der Querbohrung 26 auftretenden Reibungsverluste kompensiert, so dass die Planflächenverpressung über den Umfang vergleichmäßigt wird. Nachteilig ist dabei jedoch, dass zwischen dem in der Praxis weit verbreiteten ABS-Kupplungssystem mit gleichen Konuswinkeln und dem technisch verbesserten Kupplungssystem mit unterschiedlichen Konuswinkeln keine den Bauteilaustausch ermöglichende Auf- und Abwärtskompatibilität besteht.

Eine Besonderheit der vorliegenden Erfindung liegt in der Erkenntnis, dass die einander zugewandten komplementären Außen- und Innenkonen im Anlagebereich nicht über ihre gesamte axiale Länge gegeneinander gepresst werden, sondern nur über einen Teil der Konusfläche. Daraus resultiert der Grundgedanke der Erfindung, dass Innen- und Außenkonen des Klemmbolzens 28 und/oder der Halteorgane 34, 36 in axialer Richtung unterteilt werden können in jeweils zwei koaxial in axialem Abstand voneinander angeordnete, im Wesentlichen kegelstumpfförmige Kontaktpartien, die beim Spannvorgang entweder einzeln oder gemeinsam wirksam sind.

Daraus ergeben sich verschiedene Kombinationsmöglichkeiten, die zur Kompatibilität der beiden Kupplungssysteme mit gleichen oder unterschiedlichen bewegungsschraubenseitigen und anschlagschraubenseitigen Konuswinkeln führen.

Bei dem in den Fig. 1 bis 4 gezeigten Ausführungsbeispiel weist sowohl der Innenkonus 44 als auch der Außenkonus 40 des Klemmbolzens 28 jeweils zwei koaxial in axialem Abstand voneinander angeordnete, im Wesentlichen kegelstumpfförmige Kontaktpartien 44', 44" und 40', 40" auf, die ihrerseits zweckmäßig unterschiedliche Konuswinkel aufweisen (vgl. 4a bis 4c). Mit dieser Maßnahme lässt sich eine Kompatibilität mit einer ersten Gruppe von Halteorganen 34, 36 gemäß Fig. 2a, b, 3a, b herstellen, deren Außen- und Innenkonen 46, 42 jeweils zwei in axialem Abstand voneinander angeordnete, im Wesentlichen kegelstumpfförmige Kontaktpartien 46', 46" sowie 42', 42" aufweisen. Die Kontaktpartien sind dabei so positioniert, dass jeweils nur eine Kontaktpartie der Halteorgane 34, 36 mit einer der Kontaktpartien der benachbarten Innen- bzw. Außenkonen des Klemmbolzens 28 komplementär ist, also den gleichen Kegelwinkel aufweist und im Spannzustand gegen diese anliegt. Zusätzlich bedarf es dazu einer gegenseitigen Abstimmung der Abmessungen der zueinander komplementären Außen- und Innenkonen.

Weiter lässt sich dadurch eine Kompatibilität mit einer zweiten Gruppe von Halteorganen erzielen, deren Außen- und Innenkonen im Sinne des herkömmlichen ABS-Systems nur eine einzige kegelstumpfförmige Kontaktpartie aufweisen, die mit einer der Kontaktpartien der benachbarten Innen- und Außenkonen des Klemmbolzens komplementär ist.

Aus der Sicht der Halteorgane 34, 36 besteht eine zweite Erfindungsvariante darin, dass die Außen- oder Innenkonen 42, 46 der Halteorgane jeweils zwei koaxial in axialem Abstand voneinander angeordnete, im Wesentlichen kegelstumpfförmige Kontaktpartien 42', 42" sowie 46', 46" aufweisen, die zweckmäßig unterschiedliche Konuswinkel aufweisen. Mit einer solchen Anordnung ist die Kompatibilität zu einer ersten Gruppe von Klemmbolzen 28 gewährleistet, deren Innen- und Außenkonen 44, 40 im Sinne der vorstehenden Ausführungsvariante gemäß Fig. 4a bis c jeweils eine von zwei koaxial in axialem Abstand voneinander angeordnete, im Wesentlichen kegelstumpfförmige Kontaktpartien 40', 40" bzw. 44', 44" mit einer der Kontaktpartien der benachbarten Außen- und Innenkonen 46, 42 der Halteorgane 36, 34 komplementär ist. Andererseits besteht hier zusätzlich Kompatibilität mit einer zweiten Gruppe von Klemmbolzen, deren Innen- oder Außenkonen in der Art des herkömmlichen ABS-Systems jeweils nur eine im Wesentlichen kegelstumpfförmige Kontaktpartie aufweisen, die mit einer der Kontaktpartien der benachbarten Außen- bzw. Innenkonen 46', 46" bzw. 42', 42" der Halteorgane 36, 34 komplementär ist.

Bei den Ausführungsvarianten nach Fig. 1 bis 4, bei denen es auf die Kompatibilität zwischen den beiden Kupplungssystemen ankommt, weisen die in axialem Abstand voneinander angeordneten Kontaktpartien des Klemmbolzens und der Halteorgane einen zur jeweils freien Stirnseite hin größer werdenden Konuswinkel auf (vgl. Fig. 2a, 3a und 4a).

Sowohl bei den Halteorganen 34, 36 als auch beim Klemmbolzen 28 sind die Kontaktpartien an ihren Rändern durch jeweils eine im Wesentlichen kegelstumpfförmige Randpartie begrenzt. Im Falle des als Anschlagschraube ausgebildeten Halteorgans 34 sind die Randpartien 43', 43", im Falle des als Bewegungsschraube ausgebildeten Halteorgans 36 sind die Randpartien 47', 47", 47'" (Fig. 3b) vorgesehen. Beim Klemmbolzen 28 sind auf der Seite des Außenkonus 40 die Randpartien 41', 41" vorgesehen, während auf der Seite des Innenkonus die Randpartien 45', 45", 45"' vorgesehen sind.

Beim Ausführungsbeispiel nach Fig. 1 bis 4 sind sowohl die Kontaktpartien als auch die Randpartien an ihren Mantelflächen leicht ballig mit dem jeweils angegebenen Krümmungsradius 3,9 mm bis 20.000 mm gekrümmt. Die Krümmungsradien der Randpartien sind dabei jeweils kleiner als die benachbarten Kontaktpartien.

Die Ausführungsbeispiele gemäß Fig. 5 bis 8, 9 bis 12 und 13 bis 16 unterscheiden sich von der Ausführungsvariante nach Fig. 1 bis 4 vor allem in der Ausbildung der Kontaktpartien und der Randpartien. Der Übersichtlichkeit halber und zur Vermeidung unnötiger Wiederholungen sind in diesen Figuren gleiche Teile mit den gleichen Bezugszeichen wie bei der Figurengruppe 1 bis 4 gekennzeichnet.

Bei dem Ausführungsbeispiel nach Fig. 5 bis 8 ist erkennbar, dass die Randpartien nicht unbedingt ballig sondern auch konkav ausgebildet sein können. Dies ist beispielsweise bei den Ausführungsvarianten nach Fig. 6b und Fig. 8c anhand der Randpartien 43', 45" im Bereich des Halteorgans 34 und des Klemmbolzens 28 gezeigt.

Wie aus den Ausführungsvarianten nach Fig. 9 bis 12 und 13 bis 16 zu ersehen ist, ist es grundsätzlich auch möglich, die in axialem Abstand voneinander angeordneten Kontaktpartien der Außen- und Innenkonen jeweils gemeinsam und paarweise miteinander zu verspannen. In diesem Fall geht es weniger um die Kompatibilität zwischen den verschiedenen Spannsystemen, sondern um die Herstellung einer zuverlässigen Klemmverbindung mit zwei in axialem Abstand voneinander angeordneten Kontaktbereichen. Dies führt dazu, dass bei dem Ausführungsbeispiel nach Fig. 9 bis 12 der Innenkonus 42 des als Anschlagschraube ausgebildeten Halteorgans 34 sowie der Innenkonus 44 des Klemmbolzens 28 einen zur jeweils freien Stirnseite hin kleiner werdenden Konuswinkel aufweist, während er am benachbarten Außenkonus 40 des Klemmbolzen 28 und 46 der Bewegungsschraube 36 zur Stirnseite hin größer wird.

Bei dem in den Fig. 13 bis 16 gezeigten Ausführungsbeispiel weist der Außenkonus 46 des als Bewegungsschraube ausgebildeten Halteorgans 36 sowie der Außenkonus 40 des Klemmbolzens 28 jeweils einen zur freien Stirnseite hin kleiner werdenden Konuswinkel auf, während die komplementären Innenkonen 44 des Klemmbolzens 28 und 42 des als Anschlagschraube ausgebildeten Halteorgans 34 einer zur freien Stirnseite hin größer werdenden Konuswinkel aufweisen.

Wie vorstehend bereits ausgeführt wurde, ist es von Vorteil, wenn die zueinander komplementären Kontaktpartien der Außen- und Innenkonen 40,42 auf der Seite der Anschlagschraube 34 einen kleineren Konuswinkel aufweisen als auf der Seite der Bewegungsschraube 36. Mit dem kleineren Konuswinkel auf der Seite der Anschlagschraube 34 erhält man eine vergrößerte Axialkomponente der Spannkraft und damit eine Kompensation der Reibverluste des Klemmbolzens 28 innerhalb der Querbohrung 26.

Andererseits hat es sich gezeigt, dass bei einer solchen Konstellation auf der Seite der Bewegungsschraube 36 sowohl am Außenkonus 46 der Bewegungsschraube 36 als auch am Innenkonus 44 des Klemmbolzens 28 ein größerer Verschleiß auftritt als auf der Seite der Anschlagschraube 34. Als besonders vorteilhaft hat es sich daher erwiesen, wenn im Sinne des Ausführungsbeispiels nach Fig. 17a bis c das als Bewegungsschraube ausgebildete Halteorgan 36 einen Außenkonus 46 und der Klemmbolzen 28 auf der Seite der Bewegungsschraube einen hierzu komplementären Innenkonus 44 mit jeweils nur einer kegelstumpfförmigen Kontaktpartie aufweisen. Um die Abwärtskompatibilität zum herkömmlichen ABS-System zu gewährleisten, beträgt der Kegelwinkel in der einzigen Kontaktpartie etwa 90°.

Andererseits weisen bei dem in Fig. 17a gezeigten Ausführungsbeispiel das als Anschlagschraube ausgebildete Halteorgan 34 einen Innenkonus 42 und der Klemmbolzen 28 auf der Seite der Anschlagschraube einen Außenkonus 40 mit jeweils zwei in axialem Abstand voneinander angeordneten kegelstumpfförmigen Kontaktpartien 42', 42"; 40', 40" mit unterschiedlichen Kegelwinkeln 60° und 90' auf, von denen jeweils nur eine paarweise gegeneinander anliegen. Der Kegelwinkel der gegeneinander anliegenden Kontaktpartien beträgt hier 60°. Die zweite Kontaktpartie ist einer Kupplung mit herkömmlichen ABS-Kupplungsteilen vorbehalten und weist daher einen Kegelwinkel von 90° auf (vgl. Fig. 17b und 17c).

Die Fig. 17b zeigt Kupplungselemente mit einem herkömmlichen Klemmbolzen 28, dessen Außenkonus 40 auf der Seite der Anschlagschraube 34 einen Kegelwinkel von 90° aufweist und der in gekuppeltem Zustand gegen die 90°-Kontaktpartie 42" der Anschlagschraube anliegt.

Die Fig. 17c zeigt Kupplungselemente mit einer herkömmlichen Anschlagschraube 34, deren einziger Innenkonus 42 einen Kegelwinkel von 90° aufweist und die im gekuppelten Zustand gegen die 90°-Kontaktpartie 40" des anschlagschraubenseitigen Außenkonus 40 der Klemmschraube 28 anliegt.

Anhand der Fig. 17a bis c lässt sich somit die Auf- und Abwärtskompatibilität der erfindungsgemäßen Kupplungselemente besonders einfach nachvollziehen.

Eine weitere Besonderheit ist darin zu sehen, dass vor allem bei dem Halteorgan 36, das als Bewegungsschraube ausgebildet ist, ein Gewinde 60 vorgesehen ist, das besonders gute Führungseigenschaften im Gegengewinde und in der Gegenbohrung des zweiten Bauteils 14 aufweist. Aufgrund der verbesserten Führungseigenschaften des Halteorgans 36 und des daran anschließenden Klemmbolzens 28 wird eine verbesserte Wiederholgenauigkeit beim Spannvorgang erzielt.

Beim Ausführungsbeispiel nach Fig. 3c und 3d ist am Halteorgan 36 ein Trapezgewinde 60' mit einem Flankenwinkel von 30° vorgesehen, während beim Ausführungsbeispiel nach Fig. 3f und 3g ein Rohrgewinde 60" vorgesehen ist, das einen Flankenwinkel von 55° aufweist. Eine besonders vorteilhafte Ausführungsvariante stellt die Gewindeform nach Fig. 7a und 7c sowie Fig. 11a und 11c dar, die ein Sägengewinde 60'" bildet, dessen Stützflanke 61' in Bezug auf eine Radialebene 63 einen Flankenwinkel von 15° und dessen zur Werkzeugmitte weisende Flanke 61" einen Flankenwinkel von 30° aufweist. Selbstverständlich unterliegen die Flankenwinkel einer Optimierung, die durch Änderungen in der einen oder anderen Richtung zu weiteren Verbesserungen führen kann.

Eine weitere Verbesserung der Führungseigenschaften im Bereich des als Bewegungsschraube ausgebildeten Halteorgans 36 kann erzielt werden, wenn das der Passbohrung zugewandte Ende der Radialbohrung 32 als gewindefreie Führungsbohrung 70 gestaltet wird und die Bewegungsschraube einen entsprechenden gewindefreien Führungsabschnitt 72 aufweist (vgl. Fig. 5, 7a). Die gewindefreien Abschnitte 70, 72 sorgen dafür, dass die Bewegungsschraube 36 im kritischen Bereich der Konusverbindung mit geringerem Passungsspiel geführt wird und das Gewinde überwiegend eine Spannfunktion in Axialrichtung erhält.

Eine weitere Verbesserung in der Wiederholgenauigkeit kann erzielt werden, wenn der Klemmbolzen und/oder die Halteorgane zumindest im Bereich der Innen- und/oder Außenkonen eine reibungsmindernde Beschichtung oder eine verschleißmindernde Oberflächenbearbeitung aufweisen.

Bei dem in Fig. 1 gezeigten Ausführungsbeispiel befindet sich zwischen der Stirnseite des Passzapfens 12 und dem Boden 50 der Passbohrung 16 ein mit einem axialen Durchbruch 76 versehener Dichtring 78, der einen durch den Spannmechanismus 18 hindurchgeführten Kühlmittelkanal 80 nach außen hin abdichtet. Weiter weist der Klemmbolzen 28 des Spannmechanismus 18 einen langlochartigen Durchbruch 98,98' auf, der entweder unmittelbar oder über ein durchgreifendes Kühlmittelrohr 81 mit dem Kühlmittelkanal 80,80' in den beiden Bauteilen 10,14 kommuniziert.

Im Falle des in Fig. 18b und 22 gezeigten Ausführungsbeispiels mündet der von dem zweiten Bauteil 14 ankommende Kühlmittelkanal 80 durch den Dichtring 78 hindurch in ein Kühlmittelrohr 81, das durch den langlochartigen Durchbruch 98 im Klemmbolzen 28 stufenfrei hindurchgesteckt ist und auf der anderen Seite im Kühlmittelkanal 80' des Bauteils 10 endet. Das Kühlmittelrohr 81 sorgt gleichzeitig für eine Drehsicherung des Klemmbolzens 28 in der Querbohrung 26. Diese Drehsicherung ist insofern wichtig, als der Klemmbolzen 28 an der Übergangsstelle zu seinem Außen- und Innenkonus in Anpassung an die Halteorgane nicht exakt rotationssymmetrisch ist und daher eine definierte Drehorientierung in der Querbohrung braucht (vgl. Fig. 20d, 22). Das Kühlmittelrohr 81 eignet sich wegen des glatten Übergangs besonders für die Mindermengenschmiertechnik (MMS).

Bei dem in Fig. 20a und b gezeigten Ausführungsbeispiel fehlt das Kühlmittelrohr 81. Hier wird das Kühlschmiermittel innerhalb des Spannmechanismus 18 unmittelbar durch den im Klemmbolzen 28 angeordneten Durchbruch 98' hindurchgeleitet. Grundsätzlich wäre hier ein zylindrischer Durchbruch ausreichend. Im Hinblick auf die unterschiedlichen Kegelwinkel 60° (Fig. 20a) und 90° (Fig. 20b) der Anschlusskonen zum Halteorgan 34 dringt der Klemmbolzen 28 je nach wirksamem Kegelwinkel unterschiedlich weit in die Querbohrung 26 ein. Für eine vollständige Überlappung ist daher ein langlochartiger Durchbruch 98' erforderlich (vgl. Fig. 20d). Außerdem ist in diesem Fall eine zusätzliche Drehsicherung für den Klemmbolzen 28 vorgesehen. Die Drehsicherung besteht hier aus einem radial in den Passzapfen 12 eingedrehten Sicherungsstift 102, der auf der Seite der Querbohrung 26 mit seiner Spitze 104 in eine randoffene Längsausnehmung 106 des Klemmbolzens 28 sichernd eingreift (vgl. Fig. 20d).

An den Dichtring 78 schließt sich radial und axial ein Zentrierring 82 an, der wesentlich zur Zentrierung der beiden Bauteile 10, 14 beiträgt. Der Zentrierring 82 kann dabei entweder einstückig mit dem Dichtring 78 verbunden (Fig. 1) oder als vom Dichtring 78 getrenntes Teil (Fig. 18a) ausgebildet sein. Der am Zapfenende angeordnete Zentrierring 82 ist durch axialen Druck beim Kontakt mit dem aufnahmeseitigen Bohrungsgrund 50 aufweitbar. Um eine gezielte Aufweitung zu erhalten, kann der Zentrierring 82 entweder mindestens einen Hohlraum 84 aufweisen, der sich ganz oder teilweise über den Umfang des Zentrierrings erstreckt, oder mit einer Einlage 86 aus Metall oder Kunststoff versehen sein. Der Zentrierring 82 steht dabei mit einer nicht dargestellten Eindrehung in dichtendem Kontakt mit dem Dichtring 78. Der Zentrierring 82 kann aus Metall, Kunststoff oder Gummi oder aus einem Verbundmaterial bestehen. Vorteilhafterweise wird hierfür ein elastomeres Material verwendet.

Beim Trennen der Bauteile 10,14 verbleibt der Dichtring 78 in der Passbohrung 16, während der Zentrierring 82, sofern er als getrenntes Teil ausgebildet ist, am Passzapfen 12 verbleibt. Vorteilhafterweise besteht zwischen dem Zentrierring 82 und dem Passzapfen 12 ein Formschluss, der beispielsweise durch einen Ringwulst 90 am Zentrierring 82 und durch eine komplementäre umlaufende Nut im Passzapfen 12 hervorgerufen werden kann.

In Fig. 18b ist ein weiteres Ausführungsbeispiel eines Dichtrings 78 mit angeformtem Zentrierring 82 dargestellt, bei welchem in den Zentrierring 82 über dessen Umfang verteilt mehrere Kontaktkugeln 92 aus Metall oder Kunststoff eingebettet sind. Um die Flächenpressung der Kontaktkugeln 92 zu reduzieren, können in die Zentrierfläche 94 der Passbohrung 16 und in die benachbarte Gegenfläche am Passzapfen 12 teilzylindrische Lauf- und Stützspuren für die Kontaktkugeln 92 eingeformt sein. Beim Trennen der Bauteile 10,14 bleibt der Dichtring 78 mit seinem Zentrierring 82 in der Passbohrung 16. Die Zentrierflächen 94,96 sind dazu konisch ausgebildet.

Mit den erfindungsgemäßen Maßnahmen kann durch eine spezielle Auswahl der Konuswinkel innerhalb des Spannmechanismus 18 zwischen dem Klemmbolzen 28 und den Halteorganen eine Herabsetzung der Reibverluste und damit eine um 30 bis 40 % erhöhte Spannkraft sowie eine entsprechend größere Biegesteifigkeit im Bereich der Verbindungsvorrichtung erzielt werden. Um diesen Vorteil besser nutzen zu können, sind außerdem Vorkehrungen getroffen, die zu einer höheren Drehmomentaufnahme innerhalb der Verbindung führen. Bei dem in Fig. 21a bis c, 22 gezeigten Ausführungsbeispiel sind zu diesem Zweck im Bereich der Ringflächen 22,24 eine Radialnut 108 im Bauteil 14 und ein Nutenstein 110 im Bauteil 10 vorgesehen, die im montierten Zustand passgenau ineinander greifen. Der Nutenstein 110 ist mit einer Befestigungsschraube 112 radial in eine Ausnehmung 107 im Flansch 114 des Bauteils 10 eingesetzt und steht mit seinem Mitnehmerteil 111 axial so über die Ringfläche 22 über, dass er in gekuppeltem Zustand in die Radialnut 108 des anderen Bauteils 14 eingreifen kann. Zusätzlich ist in der Ringfläche 22 des ersten Bauteils 10 ein axial überstehender Orientierungsstift 116 vorgesehen, der im montierten Zustand mit seiner Spitze 118 in eine Orientierungsbohrung 120 im Bereich der Planfläche 24 des zweiten Bauteils 14 eingreift. Der Orientierungsstift 116 hat im Vergleich zu dem Nutenstein 110 für die Drehmomentübertragung nur eine untergeordnete Bedeutung (vgl. Fig. 21 c).

Zusammenfassend ist folgendes festzuhalten: Die Erfindung bezieht sich auf eine Vorrichtung zur Verbindung zweier Bauteile 10, 14, beispielsweise zweier Werkzeugteile. Das erste Bauteil 10 weist dabei einen zylindrischen Passzapfen 12 sowie eine radial über diesen Passzapfen 12 überstehende Ringfläche 22 auf, während das zweite Bauteil 14 eine zylindrische Passbohrung 16 zur Aufnahme des Passzapfens 12 sowie eine die Passbohrung 16 umgebende Ringfläche 24 aufweist. Weiter ist ein Spannmechanismus 18 vorgesehen, der beim Spannvorgang dafür sorgt, dass der Passzapfen 12 in die Passbohrung 16 eingezogen wird und dabei die Ringflächen 22, 24 gegeneinander gepresst werden. Der Spannmechanismus enthält einen in einer Querbohrung 26 des Passzapfens 12 verschiebbar angeordneten Klemmbolzen 28 sowie zwei im zweiten Bauteil 14 einander diametral gegenüberliegende Halteorgane 34, 36, die mit je einem stirnseitigen Innen- bzw. Außenkonus gegen einen komplementären Außen- bzw. Innenkonus des Klemmbolzens 28 anliegen und beim Spannvorgang keilartig mit diesem verspannt werden. Erfindungsgemäß weisen die Innen- und/oder Außenkonen des Klemmbolzens 28 und/oder der Halteorgane 34, 36 jeweils zwei koaxial in axialem Abstand voneinander angeordnete, im Wesentlichen kegelstumpfförmige Kontaktpartien 40', 40", 44', 44", 42', 42", 46', 46" auf, die beim Spannvorgang entweder einzeln oder gemeinsam wirksam sind.

### Bezugszeichenliste

- 10: erstes Bauteil
- 12: Passzapfen
- 14: zweites Bauteil
- 16: Passbohrung
- 18: Spannmechanismus
- 22: Ringfläche (1. Bauteil)
- 24: Ringfläche (2. Bauteil)
- 26: Querbohrung
- 28: Klemmbolzen
- 30: Radialbohrung mit Innengewinde
- 32: Radialbohrung mit Innengewinde
- 34: Halteorgan (Anschlagschraube )
- 36: Halteorgan (Bewegungsschraube)
- 37: Anschlagkonus
- 38: Senkkopf
- 39: Innenmehrkant
- 40: Außenkonus
- 40', 40": Kontaktpartie
- 41', 41": Randpartie
- 42: Innenkonus
- 42', 42": Kontaktpartie
- 43', 43": Randpartie
- 44: Innenkonus
- 44', 44": Kontaktpartie
- 45', 45", 45"': Randpartie
- 46: Außenkonus
- 46', 46": kegelstumpfförmige Kontaktpartie
- 47', 47", 47'": Randpartie
- 50: Bohrungsgrund
- 52: Mantelumfang
- 54: Freiraum
- 56: Erhebung
- 57: höchste Position
- 58: Außenrand
- 60: Gewinde
- 60': Trapezgewinde
- 60": Rohrgewinde
- 60'": Sägengewinde
- 70: gewindefreier Abschnitt / gewindefreie Führungsbohrung
- 72: gewindefreier Abschnitt / gewindefreier Führungsabschnitt
- 76: Durchbruch
- 78: Dichtring
- 80,80': Kühlmittelkanal
- 81: Kühlmittelrohr
- 82: Zentrierring
- 84: Hohlraum
- 86: Einlage
- 90: Ringwulst
- 92: Kontaktkugeln
- 94,96: Zentrierflächen
- 98,98': langlochartiger Durchbruch
- 102: Sicherungsstift
- 104: Spitze
- 106: Längsausnehmung
- 108: Radialnut
- 110: Nutenstein
- 111: Mitnehmerteil
- 112: Befestigungsschraube
- 114: Flansch
- 116: Orientierungsstift
- 118: Spitze
- 120: Orientierungsbohrung

## Patentansprüche

1. Vorrichtung zur Verbindung zweier Bauteile, insbesondere zweier Werkzeugteile, mit einem am ersten Bauteil (10) angeordneten zylindrischen Passzapfen (12) und mit einer den Passzapfen (12) an dessen Wurzel umgebenden, radial überstehenden Ringfläche (22), mit einer im zweiten Bauteil (14) angeordneten zylindrischen Passbohrung (16) zur Aufnahme des Passzapfens (12) und mit einer die Passbohrung (16) an deren Rand umgebenden Ringfläche (24), mit einem mit einer zylindrischen Führungsfläche in einer Querbohrung (26) des Passzapfens (12) verschiebbar geführten, an seinen stirnseitigen Enden je einen zur Führungsfläche konzentrischen Innen- oder Außenkonus aufweisenden Klemmbolzen (28), dessen Länge kleiner als der Durchmesser des Passzapfens (12) im Bereich der Querbohrung (26) ist und mit zwei in im Bereich der Passbohrung (16) einander diametral gegenüberliegende, vorzugsweise mit einem Innengewinde versehene Radialbohrungen (30, 32) eingesetzten, einen nach dem Inneren der Passbohrung (16) weisenden, zum Innen- bzw. Außenkonus des Klemmbolzens (28) komplementären Außen- oder Innenkonus aufweisenden, beim Spannvorgang mittels einander zugeordneter kegelstumpfförmiger Kontaktpartien keilartig mit dem Klemmbolzen (28) verspannbaren Halteorganen (34, 36), wobei die zueinander komplementären Innen- und Außenkonen paarweise einen beim Spannvorgang den Einzug des Passzapfens (12) in die Passbohrung (16) und ein gegenseitiges Anpressen der Ringflächen (22, 24) bewirkenden Achsversatz aufweisen, **dadurch gekennzeichnet, dass** der Innenkonus (44) und/oder der Außenkonus (40) des Klemmbolzens (28) zwei koaxial in axialem Abstand voneinander angeordnete, im Wesentlichen kegelstumpfförmige Kontaktpartien (40', 40"; 44', 44") aufweist, die beim Spannvorgang entweder einzeln oder gemeinsam wirksam sind.

2. Vorrichtung nach Anspruch 1, **dadurch gekennzeichnet, dass** die beiden benachbarten Kontaktpartien (40', 40"; 44', 44") unterschiedliche Konuswinkel aufweisen.

3. Vorrichtung nach Anspruch 1, **dadurch gekennzeichnet, dass** der Außenkonus (46) oder der Innenkonus (42) einer ersten Gruppe von Halteorganen (36, 34) zwei koaxial in axialem Abstand voneinander angeordnete, im Wesentlichen kegelstumpfförmige Kontaktpartien (46', 46"; 42', 42") vorzugsweise mit unterschiedlichen Konuswinkeln aufweist, von denen nur eine mit einer der Kontaktpartien (44', 44"; 40', 40") des benachbarten Innenkonus (44) oder Außenkonus (40) des Klemmbolzens (28) komplementär ist.

4. Vorrichtung nach Anspruch 1 bis 3, **dadurch gekennzeichnet, dass** der Außenkonus oder der Innenkonus einer zweiten Gruppe von Halteorganen nur eine kegelstumpfförmige Kontaktpartie aufweist, die mit einer der Kontaktpartien (44', 44"; 40', 40") des benachbarten Innenkonus (44) oder Außenkonus (40) des Klemmbolzens (28) komplementär ist.

5. Vorrichtung nach Anspruch 1 oder 2, **dadurch gekennzeichnet, dass** der Außenkonus oder der Innenkonus einer dritten Gruppe von Halteorganen (34, 36) zwei koaxial in axialem Abstand voneinander angeordnete, im Wesentlichen kegelstumpfförmige Kontaktpartien (42', 42"; 46', 46") aufweist, von denen beide mit jeweils einer der Kontaktpartien (40', 40"; 44', 44") des benachbarten Innenkonus oder Außenkonus des Klemmbolzens (28) komplementär sind.

6. Vorrichtung zur Verbindung zweier Bauteile (10, 14), insbesondere zweier Werkzeugteile, mit einem am ersten Bauteil (10) angeordneten zylindrischen Passzapfen (12) und mit einer den Passzapfen (12) an dessen Wurzel umgebenden, radial überstehenden Ringfläche (22), mit einer im zweiten Bauteil (14) angeordneten zylindrischen Passbohrung (16) zur Aufnahme des Passzapfens (12) und mit einer die Passbohrung (16) an deren Rand umgebenden Ringfläche (24), mit einem mit einer zylindrischen Führungsfläche in einer Querbohrung (26) des Passzapfens (12) verschiebbar geführten, an seinen stirnseitigen Enden je einen zur Führungsfläche konzentrischen Innen- oder Außenkonus aufweisenden Klemmbolzen (28), dessen Länge kleiner als der Durchmesser des Passzapfens (12) im Bereich der Querbohrung (26) ist und mit zwei in im Bereich der Passbohrung (16) einander diametral gegenüberliegende, vorzugsweise mit einem Innengewinde versehene Radialbohrungen eingesetzten, einen nach dem Inneren der Passbohrung (16) weisenden, zum Innen- bzw. Außenkonus des Klemmbolzens (28) komplementären Außen- oder Innenkonus aufweisenden, beim Spannvorgang mittels einander zugeordneter kegelstumpfförmiger Kontaktpartien keilartig mit dem Klemmbolzen (28) verspannbaren Halteorganen (34, 36), wobei die zueinander komplementären Innen- und Außenkonen paarweise einen beim Spannvorgang den Einzug des Passzapfens (12) in die Passbohrung (16) und ein gegenseitiges Anpressen der Ringflächen (22, 24) bewirkenden Achsversatz aufweisen, **dadurch gekennzeichnet, dass** der Außenkonus (46) oder der Innenkonus (42) zumindest eines der Halteorgane (36, 34) zwei koaxial in axialem Abstand voneinander angeordnete, im Wesentlichen kegelstumpfförmige Kontaktpartien (46', 46"; 42', 42") aufweist, die beim Spannvorgang entweder einzeln oder gemeinsam wirksam sind.

7. Vorrichtung nach Anspruch 6, **dadurch gekennzeichnet, dass** die beiden benachbarten Kontaktpartien (46', 46"; 42', 42") unterschiedliche Konuswinkel aufweisen.

8. Vorrichtung nach Anspruch 7, **dadurch gekennzeichnet, dass** der Innenkonus (44) und/oder Außenkonus (40) einer ersten Gruppe von Klemmbolzen (28) zwei koaxial in axialem Abstand voneinander angeordnete, im Wesentlichen kegelstumpfförmige Kontaktpartien (44', 44"; 40', 40") vorzugsweise mit unterschiedlichen Konuswinkeln aufweist, von denen jeweils nur eine mit einer der Kontaktpartien (46', 46"; 42', 42") des benachbarten Außenkonus (46) oder Innenkonus (42) eines der Halteorgane (36, 34) komplementär ist.

9. Vorrichtung nach einem der Ansprüche 6 bis 8, **dadurch gekennzeichnet, dass** der Innenkonus und/oder der Außenkonus einer zweiten Gruppe von Klemmbolzen (28) nur eine im Wesentlichen kegelstumpfförmige Kontaktpartie aufweist, die mit einer der Kontaktpartien (46', 46"; 42', 42") des benachbarten Außenkonus (46) oder Innenkonus (42) eines der Halteorgane (36, 34) komplementär ist.

10. Vorrichtung nach Anspruch 6, **dadurch gekennzeichnet, dass** der Innenkonus und/oder der Außenkonus einer dritten Gruppe von Klemmbolzen (28) zwei koaxial in axialem Abstand voneinander angeordnete, im Wesentlichen kegelstumpfförmige Kontaktpartien (40', 40"; 44', 44") aufweist, von denen beide mit einer der Kontaktpartien des benachbarten Außenkonus oder Innenkonus eines der Halteorgane (34, 36) komplementär sind.

11. Vorrichtung nach einem der Ansprüche 1 bis 10, **dadurch gekennzeichnet, dass** die in axialem Abstand voneinander angeordneten Kontaktpartien des Klemmbolzens (28) und der Halteorgane (34, 36) einen zur jeweils freien Stirnseite hin größer werdenden Konuswinkel aufweisen.

12. Vorrichtung nach einem der Ansprüche 1 bis 11, **dadurch gekennzeichnet, dass** die Kontaktpartien des Klemmbolzens (28) und/oder der Halteorgane (34, 36) eine in axialer Richtung vorzugsweise schwach gewölbte Mantelfläche aufweisen.

13. Vorrichtung nach einem der Ansprüche 1 bis 12, **dadurch gekennzeichnet, dass** die Kontaktpartien des Klemmbolzens (28) und der Halteorgane (34, 36) an ihren umlaufenden Rändern durch jeweils eine im Wesentlichen kegelstumpfförmige Randpartie (41', 41"; 45', 45"; 43', 43"; 47', 47") begrenzt sind.

14. Vorrichtung nach Anspruch 13, **dadurch gekennzeichnet, dass** die Randpartien eine in axialer Richtung ballige oder hohlkehlenartig gekrümmte Mantelfläche aufweisen.

15. Vorrichtung nach einem der Ansprüche 1 bis 14, **dadurch gekennzeichnet, dass** eines der Halteorgane (34) als am zweiten Bauteil (14) festgelegte Anschlagschraube und das andere Halteorgan (36) als beim Spannvorgang betätigbare Bewegungsschraube ausgebildet ist, und dass die zueinander komplementären kegelstumpfförmigen Kontaktpartien auf der Seite der Anschlagschraube einen kleineren Konuswinkel aufweisen als auf der Seite der Bewegungsschraube.

16. Vorrichtung nach Anspruch 15, **dadurch gekennzeichnet, dass** das als Bewegungsschraube ausgebildete Halteorgan (36) einen Außenkonus und der Klemmbolzen (28) auf der Seite der Bewegungsschraube einen hierzu komplementären Innenkonus mit jeweils nur einer kegelstumpfförmigen Kontaktpartie aufweisen.

17. Vorrichtung nach Anspruch 15 oder 16, **dadurch gekennzeichnet, dass** das als Anschlagschraube ausgebildete Halteorgan (34) einen Innenkonus und der Klemmbolzen (28) auf der Seite der Anschlagschraube einen Außenkonus mit jeweils zwei in axialem Abstand voneinander angeordneten kegelstumpfförmigen Kontaktpartien mit unterschiedlichen Kegelwinkeln aufweisen.

18. Vorrichtung nach einem der Ansprüche 1 bis 17, **dadurch gekennzeichnet, dass** die Bewegungsschraube und/oder die Anschlagschraube ein Sägengewinde (60"') mit einer flachen Stützflanke und zylindrischen Führungsflächenabschnitten aufweist.

19. Vorrichtung nach einem der Ansprüche 1 bis 17, **dadurch gekennzeichnet, dass** die Bewegungsschraube und/oder die Anschlagschraube ein Trapezgewinde (60') mit zylindrischen Führungsflächenabschnitten aufweist.

20. Vorrichtung nach einem der Ansprüche 15 bis 19, **dadurch gekennzeichnet, dass** das als Anschlagschraube ausgebildete Halteorgan (34) einen durch einen kreisförmigen Außenrand (58) begrenzten, einen Anschlagkonus (37) aufweisenden flanschartigen Senkkopf (38) sowie eine in radialem Abstand innerhalb des Außenrands (58) angeordnete, einen zentralen Innenmehrkant (39) begrenzende Erhebung (56) aufweist, deren höchste Position (57) im montierten Zustand innerhalb des zylindrischen Mantelumfangs (52) des zweiten Bauteils (14) angeordnet ist.

## Claims

1. A device for connecting two components, in particular two tool parts, having a cylindrical locating pin (12), which is arranged on the first component (10), and having a radially projecting annular face (22), which surrounds the locating pin (12) at the root thereof, having a cylindrical locating bore (16), which is arranged in the second component (14) and is intended for receiving the locating pin (12), and having an annular face (24), which surrounds the locating bore (16) at the periphery thereof, having a clamping bolt (28), which is movably guided with a cylindrical guiding surface in a transverse bore (26) of the locating pin (12), has at its extreme ends an inner cone or outer cone concentric to the guiding surface and is of a length that is less than the diameter of the locating pin (12) in the region of the transverse bore (26), and having two holding elements (34, 36), which are inserted in radial bores (30, 32) that lie diametrically opposite one another in the region of the locating bore (16) and are preferably provided with an internal thread, have an outer cone or inner cone facing the interior of the locating bore (16) and complementing the inner or outer cone of the clamping bolt (28) and, during the clamping operation, can be clamped in a wedge-like manner with the clamping bolt (28) by means of frustoconical contact portions assigned to one another, the inner and outer cones that complement one another having in pairs an axial offset that has the effect during the clamping operation of drawing the locating pin (12) into the locating bore (16) and pressing the annular faces (22, 24) against one another, **characterized in that** the inner cone (44) and/or the outer cone (40) of the clamping bolt (28) has two substantially frustoconical contact portions (40', 40"; 44', 44") arranged coaxially at an axial distance from one another, which during the clamping operation are effective either individually or at one and the same time.

2. The device as claimed in claim 1, **characterized in that** the two neighboring contact portions (40', 40"; 44', 44") have different cone angles.

3. The device as claimed in claim 1, **characterized in that** the outer cone (46) or the inner cone (42) of a first group of holding elements (36, 34) has two substantially frustoconical contact portions (46', 46"; 42', 42") arranged coaxially at an axial distance from one another, preferably with different cone angles, only one of which complements one of the contact portions (44', 44"; 40', 40") of the neighboring inner cone (44) or outer cone (40) of the clamping bolt (28).

4. The device as claimed in claims 1 to 3, **characterized in that** the outer cone or the inner cone of a second group of holding elements has only one frustoconical contact portion, which complements one of the contact portions (44', 44"; 40', 40") of the neighboring inner cone (44) or outer cone (40) of the clamping bolt (28).

5. The device as claimed in claim 1 or 2, **characterized in that** the outer cone or the inner cone of a third group of holding elements (34, 36) has two substantially frustoconical contact portions (42', 42" ; 46', 46") arranged coaxially at an axial distance from one another, both of which complement in each case one of the contact portions (40', 40"; 44', 44") of the neighboring inner cone or outer cone of the clamping bolt (28).

6. A device for connecting two components (10, 14), in particular two tool parts, having a cylindrical locating pin (12), which is arranged on the first component (10), and having a radially projecting annular face (22), which surrounds the locating pin (12) at the root thereof, having a cylindrical locating bore (16), which is arranged in the second component (14) and is intended for receiving the locating pin (12), and having an annular face (24), which surrounds the locating bore (16) at the periphery thereof, having a clamping bolt (28), which is movably guided with a cylindrical guiding surface in a transverse bore (26) of the locating pin (12), has at its extreme ends an inner cone or outer cone concentric to the guiding surface and is of a length that is less than the diameter of the locating pin (12) in the region of the transverse bore (26), and having two holding elements (32, 34), which are inserted in radial bores that lie diametrically opposite one another in the region of the locating bore (16) and are preferably provided with an internal thread, have an outer cone or inner cone facing the interior of the locating bore (16) and complementing the inner or outer cone of the clamping bolt (28) and, during the clamping operation, can be clamped in a wedge-like manner with the clamping bolt (28) by means of frustoconical contact portions assigned to one another, the inner and outer cones that complement one another having in pairs an axial offset that has the effect during the clamping operation of drawing the locating pin (12) into the locating bore (16) and pressing the annular faces (22, 24) against one another, **characterized in that** the outer cone (46) or the inner cone (42) of at least one of the holding elements (36, 34) has two substantially frustoconical contact portions (46', 46"; 42', 42") arranged coaxially at an axial distance from one another, which during the clamping operation are effective either individually or at one and the same time.

7. The device as claimed in claim 6, **characterized in that** the two neighboring contact portions (46', 46''; 42', 42") have different cone angles.

8. The device as claimed in claim 7, **characterized in that** the inner cone (44) and/or outer cone (40) of a first group of clamping bolts (28) has two substantially frustoconical contact portions (44', 44"; 40', 40") arranged coaxially at an axial distance from one another, preferably with different cone angles, only one of which in each case complements one of the contact portions (46', 46"; 42', 42") of the neighboring outer cone (46) or inner cone (42) of one of the holding elements (36, 34).

9. The device as claimed in one of claims 6 to 8, **characterized in that** the inner cone and/or the outer cone of a second group of clamping bolts (28) has only one substantially frustoconical contact portion, which complements one of the contact portions (46', 46''; 42', 42") of the neighboring outer cone (46) or inner cone (42) of one of the holding elements (36, 34).

10. The device as claimed in claim 6, **characterized in that** the inner cone and/or the outer cone of a third group of clamping bolts (28) has two substantially frustoconical contact portions (40', 40" ; 44', 44") arranged coaxially at an axial distance from one another, both of which complement one of the contact portions of the neighboring outer cone or inner cone of one of the holding elements (34, 36).

11. The device as claimed in one of claims 1 to 10, **characterized in that** the contact portions, arranged at an axial distance from one another, of the clamping bolt (28) and of the holding elements (34, 36) have a cone angle that becomes greater toward the respectively free end face.

12. The device as claimed in one of claims 1 to 11, **characterized in that** the contact portions of the clamping bolt (28) and/or of the holding elements (34, 36) have a preferably slightly curved lateral surface in the axial direction.

13. The device as claimed in one of claims 1 to 12, **characterized in that** the contact portions of the clamping bolt (28) and of the holding elements (34, 36) are delimited at the surrounding peripheries thereof by in each case a substantially frustoconical peripheral portion (41', 41" ; 45', 45''; 43', 43"; 47', 47").

14. The device as claimed in claim 13, **characterized in that** the peripheral portions have a lateral surface that is crowned or curved in a flute-like manner in the axial direction.

15. The device as claimed in one of claims 1 to 14, **characterized in that** one of the holding elements (34) is formed as a stop screw that is fixed on the second component (14) and the other holding element (36) is formed as a movement screw that can be actuated during the clamping operation, and **in that** the frustoconical contact portions complementing one another have a smaller cone angle on the side of the stop screw than on the side of the movement screw.

16. The device as claimed in claim 15, **characterized in that** the holding element (36) that is formed as a movement screw has an outer cone and the clamping bolt (28) on the side of the movement screw has an inner cone complementing said outer cone, with in each case only one frustoconical contact portion.

17. The device as claimed in claim 15 or 16, **characterized in that** the holding element (34) that is formed as a stop screw has an inner cone and the clamping bolt (28) on the side of the stop screw has an outer cone, with in each case two frustoconical contact portions arranged at an axial distance from one another, with different cone angles.

18. The device as claimed in one of claims 1 to 17, **characterized in that** the movement screw and/or the stop screw has a sawtooth thread (60"') with a flat supporting flank and cylindrical guiding surface portions.

19. The device as claimed in one of claims 1 to 17, **characterized in that** the movement screw and/or the stop screw has a trapezoidal thread (60') with cylindrical guiding surface portions.

20. The device as claimed in one of claims 15 to 19, **characterized in that** the holding element (34) that is formed as a stop screw has a flange-like countersunk head (38), which is delimited by a circular outer periphery (58) and has a stop cone (37), and an elevation (56), which is arranged at an axial distance within the outer periphery (58), delimits a central polygonal socket (39) and the highest point (57) of which in the assembled state is arranged within the cylindrical lateral circumference (52) of the second component (14).

## Revendications

1. Dispositif dévolu à l'assemblage de deux pièces structurelles, notamment de deux parties d'outil, comprenant un tenon cylindrique d'ajustement (12) situé sur la première pièce structurelle (10), une surface annulaire (22) faisant saillie dans le sens radial et entourant ledit tenon d'ajustement (12) au niveau de la base de ce dernier ; un alésage cylindrique d'ajustement (16) pratiqué dans la seconde pièce structurelle (14) et conçu pour recevoir ledit tenon d'ajustement (12), une surface annulaire (24) entourant ledit alésage d'ajustement (16) au niveau du bord de celui-ci ; une cheville de coincement (28) guidée à coulissement dans un alésage transversal (26) dudit tenon d'ajustement (12) par une surface cylindrique de guidage, et respectivement pourvue, à ses extrémités frontales, d'un cône intérieur ou extérieur concentrique à ladite surface de guidage, la longueur de ladite cheville étant inférieure au diamètre dudit tenon d'ajustement (12) dans la région dudit alésage transversal (26) ; et deux organes de retenue (34, 36) qui sont insérés dans des perçages radiaux (30, 32) diamétralement opposés l'un à l'autre dans la région de l'alésage d'ajustement (16) et préférentiellement munis d'un filetage intérieur, comportent un cône extérieur ou intérieur pointant vers l'espace interne dudit alésage d'ajustement (16) et complémentaire du cône respectivement intérieur ou extérieur de ladite cheville de coincement (28), et peuvent être bloqués sur ladite cheville de coincement (28) à la manière de coins, au cours du processus de serrage, au moyen de zones tronconiques de contact mutuellement associées, sachant que les cônes intérieurs et extérieurs mutuellement complémentaires présentent, par paires, un décalage axial provoquant, au cours du processus de serrage, la pénétration du tenon d'ajustement (12) dans ledit alésage d'ajustement (16) et une venue en applique réciproque des surfaces annulaires (22, 24), **caractérisé par le fait que** le cône intérieur (44) et/ou le cône extérieur (40) de la cheville de coincement (28) comporte(nt) deux zones de contact (40', 40" ; 44', 44") substantiellement tronconiques, agencées coaxialement avec espacement axial mutuel, et entrant en action soit individuellement, soit conjointement au cours du processus de serrage.

2. Dispositif selon la revendication 1, **caractérisé par le fait que** les deux zones voisines de contact (40', 40" ; 44', 44") présentent des angles de conicité différents.

3. Dispositif selon la revendication 1, **caractérisé par le fait que** le cône extérieur (46) ou le cône intérieur (42) d'un premier groupe d'organes de retenue (34, 36) est pourvu de deux zones de contact (46', 46" ; 42', 42") substantiellement tronconiques, agencées coaxialement avec espacement axial mutuel, présentant de préférence des angles de conicité différents, et dont l'une seulement est complémentaire de l'une des zones de contact (44', 44" ; 40', 40") du cône voisin intérieur (44) ou du cône voisin extérieur (40) de la cheville de coincement (28).

4. Dispositif selon les revendications 1 à 3, **caractérisé par le fait que** le cône extérieur ou le cône intérieur d'un deuxième groupe d'organes de retenue est doté d'une unique zone tronconique de contact, complémentaire de l'une des zones de contact (44', 44" ; 40', 40") du cône voisin intérieur (44) ou du cône voisin extérieur (40) de la cheville de coincement (28).

5. Dispositif selon la revendication 1 ou 2, **caractérisé par le fait que** le cône extérieur ou le cône intérieur d'un troisième groupe d'organes de retenue (34, 36) est muni de deux zones de contact (42', 42" ; 46', 46") substantiellement tronconiques, agencées coaxialement avec espacement axial mutuel, dont l'une et l'autre sont complémentaires de l'une respective des zones de contact (40', 40" ; 44', 44") du cône voisin intérieur ou du cône voisin extérieur de la cheville de coincement (28).

6. Dispositif dévolu à l'assemblage de deux pièces structurelles (10, 14), notamment de deux parties d'outil, comprenant un tenon cylindrique d'ajustement (12) situé sur la première pièce structurelle (10), une surface annulaire (22) faisant saillie dans le sens radial et entourant ledit tenon d'ajustement (12) au niveau de la base de ce dernier ; un alésage cylindrique d'ajustement (16) pratiqué dans la seconde pièce structurelle (14) et conçu pour recevoir ledit tenon d'ajustement (12), une surface annulaire (24) entourant ledit alésage d'ajustement (16) au niveau du bord de celui-ci ; une cheville de coincement (28) guidée à coulissement dans un alésage transversal (26) dudit tenon d'ajustement (12) par une surface cylindrique de guidage, et respectivement pourvue, à ses extrémités frontales, d'un cône intérieur ou extérieur concentrique à ladite surface de guidage, la longueur de ladite cheville étant inférieure au diamètre dudit tenon d'ajustement (12) dans la région dudit alésage transversal (26) ; et deux organes de retenue (34, 36) qui sont insérés dans des perçages radiaux diamétralement opposés l'un à l'autre dans la région de l'alésage d'ajustement (16) et préférentiellement munis d'un filetage intérieur, comportent un cône extérieur ou intérieur pointant vers l'espace interne dudit alésage d'ajustement (16) et complémentaire du cône respectivement intérieur ou extérieur de ladite cheville de coincement (28), et peuvent être bloqués sur ladite cheville de coincement (28) à la manière de coins, au cours du processus de serrage, au moyen de zones tronconiques de contact mutuellement associées, sachant que les cônes intérieurs et extérieurs mutuellement complémentaires présentent, par paires, un décalage axial provoquant, au cours du processus de serrage, la pénétration du tenon d'ajustement (12) dans ledit alésage d'ajustement (16) et une venue en applique réciproque des surfaces annulaires (22, 24), **caractérisé par le fait que** le cône extérieur (46) ou le cône intérieur (42) d'au moins l'un des organes de retenue (36, 34) comporte deux zones de contact (46', 46" ; 42', 42") substantiellement tronconiques, agencées coaxialement avec espacement axial mutuel, et entrant en action soit individuellement, soit conjointement au cours du processus de serrage.

7. Dispositif selon la revendication 6, **caractérisé par le fait que** les deux zones voisines de contact (46', 46" ; 42', 42") présentent des angles de conicité différents.

8. Dispositif selon la revendication 7, **caractérisé par le fait que** le cône intérieur (44) et/ou le cône extérieur (40) d'un premier groupe de chevilles de coincement (28) comporte(nt) deux zones de contact (44', 44" ; 40', 40") substantiellement tronconiques, agencées coaxialement avec espacement axial mutuel, présentant de préférence des angles de conicité différents, et dont l'une seulement est respectivement complémentaire de l'une des zones de contact (46', 46" ; 42', 42") du cône voisin extérieur (46) ou du cône voisin intérieur (42) de l'un des organes de retenue (36, 34).

9. Dispositif selon l'une des revendications 6 à 8, **caractérisé par le fait que** le cône intérieur et/ou le cône extérieur d'un deuxième groupe de chevilles de coincement (28) comporte(nt) une unique zone de contact substantiellement tronconique, complémentaire de l'une des zones de contact (46', 46" ; 42', 42") du cône voisin extérieur (46) ou du cône voisin intérieur (42) de l'un des organes de retenue (36, 34).

10. Dispositif selon la revendication 6, **caractérisé par le fait que** le cône intérieur et/ou le cône extérieur d'un troisième groupe de chevilles de coincement (28) comporte(nt) deux zones de contact (40', 40 " ; 44', 44") substantiellement tronconiques, agencées coaxialement avec espacement axial mutuel, dont l'une et l'autre sont complémentaires de l'une des zones de contact du cône voisin extérieur ou du cône voisin intérieur de l'un des organes de retenue (34, 36).

11. Dispositif selon l'une des revendications 1 à 10, **caractérisé par le fait que** les zones de contact de la cheville de coincement (28) et des organes de retenue (34, 36), agencées avec espacement axial mutuel, présentent un angle de conicité croissant en direction de la face extrême libre considérée.

12. Dispositif selon l'une des revendications 1 à 11, **caractérisé par le fait que** les zones de contact de la cheville de coincement (28) et/ou des organes de retenue (34, 36) sont pourvues d'une surface d'enveloppe offrant, de préférence, un faible bombement dans la direction axiale.

13. Dispositif selon l'une des revendications 1 à 12, **caractérisé par le fait que** les zones de contact de la cheville de coincement (28) et des organes de retenue (34, 36) sont délimitées, au niveau de leurs bords périphériques, par une zone marginale respective (41', 41" ; 45', 45" ; 43', 43 " ; 47', 47 ") substantiellement tronconique.

14. Dispositif selon la revendication 13, **caractérisé par le fait que** les zones marginales sont dotées d'une surface d'enveloppe convexe ou arquée à la manière d'une gorge dans la direction axiale.

15. Dispositif selon l'une des revendications 1 à 14, **caractérisé par le fait que** l'un (34) des organes de retenue est réalisé sous la forme d'une vis de butée verrouillée à demeure sur la seconde pièce structurelle (14), l'autre organe de retenue (36) étant réalisé sous la forme d'une vis de mouvement qui peut être actionnée au cours du processus de serrage ; et **par le fait que** les zones tronconiques de contact mutuellement complémentaires présentent, du côté de ladite vis de butée, un plus petit angle de conicité que du côté de ladite vis de mouvement.

16. Dispositif selon la revendication 15, **caractérisé par le fait que** l'organe de retenue (36), réalisé sous la forme d'une vis de mouvement, est muni d'un cône extérieur et la cheville de coincement (28) est pourvue, du côté de ladite vis de mouvement, d'un cône intérieur complémentaire du cône précité et doté, respectivement, d'une unique zone tronconique de contact.

17. Dispositif selon la revendication 15 ou 16, **caractérisé par le fait que** l'organe de retenue (34), réalisé sous la forme d'une vis de butée, est doté d'un cône intérieur et la cheville de coincement (28) est munie, du côté de ladite vis de butée, d'un cône extérieur respectivement pourvu de deux zones tronconiques de contact agencées avec espacement axial mutuel, qui présentent des angles de conicité différents.

18. Dispositif selon l'une des revendications 1 à 17, **caractérisé par le fait que** la vis de mouvement et/ou la vis de butée comporte(nt) un filetage (60"') en dents de scie, présentant un flanc d'appui aplati et des segments d'une surface cylindrique de guidage.

19. Dispositif selon l'une des revendications 1 à 17, **caractérisé par le fait que** la vis de mouvement et/ou la vis de butée comporte(nt) un filetage trapézoïdal (60') présentant des segments d'une surface cylindrique de guidage.

20. Dispositif selon l'une des revendications 15 à 19, **caractérisé par le fait que** l'organe de retenue (34), réalisé sous la forme d'une vis de butée, comprend une tête fraisée (38) du type collerette, délimitée par un rebord extérieur circulaire (58) et pourvue d'un cône de butée (37), ainsi qu'une région rehaussée (56) qui est ménagée avec espacement radial dans le périmètre intérieur dudit rebord extérieur (58), délimite une configuration polygonale centrale (39) à pans creux et dont le point sommital (57) se trouve, à l'état monté, dans les limites du pourtour (52) de l'enveloppe cylindrique de la seconde pièce structurelle (14).
